# EUROPÄISCHE PATENTSCHRIFT

(11) **EP 3 621 972 B1**
(45) Veröffentlichungstag und Bekanntmachung des Hinweises auf die Patenterteilung: **17.03.2021**
(21) Anmeldenummer: 18721016.6
(22) Anmeldetag: 25.04.2018
(51) Int. Cl.: C07F 7/18, C08K 9/06, C08L 15/00

(54) **BENZTHIAZOLHALTIGE SILANE, VERFAHREN ZU DEREN HERSTELLUNG UND DEREN VERWENDUNG**
BENZOTHIAZOLE-CONTAINING SILANES, METHOD FOR THE PREPARATION AND USE THEREOF
SILANES CONTENANT DU BENZOTHIAZOLE, PROCÉDÉ POUR LEUR FABRICATION ET LEUR UTILISATION

(30) Priorität: 08.05.2017 DE 102017207715
(43) Veröffentlichungstag der Anmeldung: 18.03.2020
(73) Patentinhaber: Evonik Operations GmbH, 45128 Essen (DE)
(72) Erfinder: KÖPFER, Alexander, 79872 Bernau im Schwarzwald (DE); KLOCKMANN, Oliver, 52382 Niederzier (DE); KUFELT, Olga, 30171 Hannover (DE); MAYER, Stefanie, 79618 Rheinfelden (DE); RÖBEN, Caren, 45133 Essen (DE); ROSENSTINGL, Sebastian, 79539 Lörrach (DE); WEHMEIER, André, 50996 Köln (DE)
(74) Vertreter: Evonik Patent Association
(86) Internationale Anmeldenummer: PCT/EP2018/060560
(87) Internationale Veröffentlichungsnummer: WO 2018/206291

(56) Entgegenhaltungen:
- EP-A1- 0 785 206
- US-B1- 6 465 581

## Beschreibung

Die Erfindung betrifft benzthiazolhaltige Silane, Verfahren zur deren Herstellung sowie deren Verwendung.

Es ist bekannt, Silane als Haftvermittler einzusetzen. So werden Aminoalkyltrialkoxysilane, Methacryloxyalkyltrialkoxysilane, Polysulfanalkyltrialkoxysilane und Mercaptoalkyltrialkoxysilane als Haftvermittler zwischen anorganischen Materialen und organischen Polymeren, als Vernetzungsmittel und Oberflächenmodifizierungsmittel eingesetzt (E.P. Plueddemann, "Silane Coupling Agents", 2nd Ed. Plenum Press 1982, S. 153-181.).

Diese Haftvermittler beziehungsweise Kupplungs- oder Verbindungsagenzien bilden sowohl zum Füllstoff als auch zum Elastomer Bindungen und bewirken somit zwischen der Füllstoffoberfläche und dem Elastomer eine gute Wechselwirkung.

Aus WO2003097734, US6465581 und Macromolecules 2002, 35, 10026-10037 sind Silane der Formel (RO)ₐ(R'O)₃₋ₐSi-Z-Sₓ-Bt bekannt, wobei Bt für eine Benzthiazolgruppe steht, die zu Gummimischungen mit einer erhöhten Verstärkung führen.

Aus CN 104045664 A, CN 102344462 A und CN 103923115 A sind monosulfidische Benzthiazolsilane bekannt.

Aus O. Klockmann, J. Hahn, H. Scherer, "The Chemistry of Mercapto Silanes", International Rubber Conference 2009, Nuremberg,
A. Wehmeier, O. Klockmann, "Solutions for processing challenges with an advanced silica-silane system", 180th Technical Meeting of the rubber Division, American Chemical Society 2011, Cleveland, p. 3
und C. Roeben, "Application of the high performance silane Si 363™ in green tire tread compounds", tire technology conference 2015, Cologne, p. 5-6
sind Silane mit einer Benzthiazylgruppe, gekoppelt an eine Kieselsäure bekannt, die sich während des Herstellprozesses einer Gummimischung bilden.

Nachteil der bekannten benzthiazolhaltigen Silane sind die hohen Mischungsviskositäten der resultierenden Gummirohmischungen, die zu einem schlechten Verarbeitungsverhalten dieser Mischungen führen.

Aufgabe der vorliegenden Erfindung ist es benzthiazolhaltige Silane zur Verfügung zu stellen, welche gegenüber den aus dem Stand der Technik bekannten Silanen ein verbessertes Verarbeitungsverhalten in Kautschukmischungen bei gleichwertigem Gummiwertebild aufweisen.

Gegenstand der Erfindung ist ein benzthiazolhaltiges Silan der Formel I 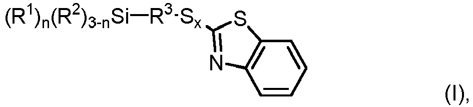
wobei R¹ gleich oder verschieden und eine R⁴O-Gruppe ist, mit R⁴ gleich H, Methyl, Ethyl, Propyl, C9-C30 verzweigten oder unverzweigten einbindigen Alkyl-, Alkenyl-, Aryl-oder Aralkylgruppe,
R² eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, vorzugsweise CH₂-CH₂, CH₂-CH(CH₃), -CH(CH₃)-CH₂-, CH₂-CH₂-CH₂ oder Gemische hiervon, m 1 bis 30, bevorzugt 2 bis 20, besonders bevorzugt 2 bis 15, ganz besonders bevorzugt 3 bis 10, außerordentlich bevorzugt 4 bis 7, ist, und R⁶ eine verzweigte oder unverzweigte C1-C30-Alkylgruppe, vorzugsweise C11-C30-Alkylgruppe, besonders bevorzugt C12-C20-Alkylgruppe ist, ganz besonders bevorzugt C12 bis C15-Alkylgruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe ist,
x gleich 2-10, vorzugsweise 2-4, besonders bevorzugt 2, ist und
n gleich 0, 1 oder 2, vorzugsweise 2, ist.

Benzthiazolhaltige Silane können Mischungen von benzthiazolhaltigen Silanen der Formel I sein.

Das Verfahrensprodukt kann Oligomere, die durch Hydrolyse und Kondensation der Alkoxysilanfunktionen der benzthiazolhaltigen Silane der Formel I entstehen, enthalten.

Die benzthiazolhaltigen Silane der Formel I können auf einem Träger, beispielsweise Wachs, Polymer oder Ruß, aufgebracht sein.

R³ kann bevorzugt -CH₂-, -CH₂CH₂-, -CH₂CH₂CH₂-, -CH₂CH₂CH₂CH₂-, -CH(CH₃)-, -CH₂CH(CH₃)-, - CH(CH₃)CH₂-, -C(CH₃)₂-, -CH(C₂H₅)-, -CH₂CH₂CH(CH₃)-, -CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂CH₂CH₂- oder 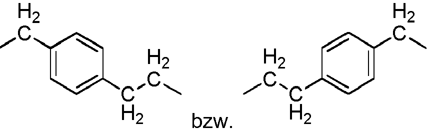 bedeuten.

R¹ kann bevorzugt Methoxy oder Ethoxy sein.

R² kann bevorzugt -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C14H29, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅-(CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O-(CH₂CH₂-O)₃-(CH₂)₁₂CH₃, -O-(CH₂CH₂-O)₄-(CH₂)₁₂CH₃, -O-(CH₂CH₂-O)₆-(CH₂)₁₂CH₃, -O-(CH₂CH₂-O)₇-(CH₂)₁₂CH₃, 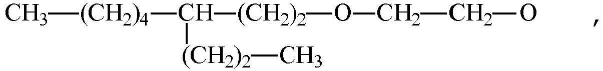 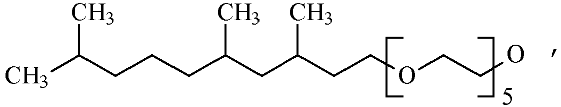 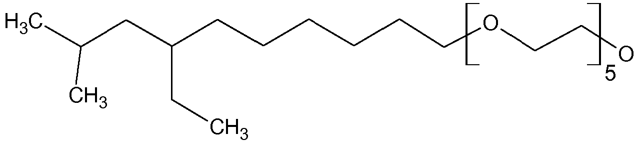 oder 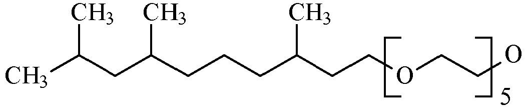 sein.

Benzthiazolhaltige Silane der Formel I können sein:
[C₁₁H₂₃O-(CH₂-CH₂O)₂](EtO)₂Si(CH₂)₃ S₂Bt, [C₁₁H₂₃O-(CH₂-CH₂O)₃](EtO)₂Si(CH₂)₃S₂Bt, [C₁₁H₂₃O-(CH₂-CH₂O)₄](EtO)₂Si(CH₂)₃ S₂Bt, [C₁₁H₂₃O-(CH₂-CH₂O)₅](EtO)₂Si(CH₂)₃ S₂Bt, [C₁₁H₂₃O-(CH₂-CH₂O)₆](EtO)₂Si(CH₂)₃ S₂Bt, [C₁₂H₂₅O-(CH₂-CH₂O)₂](EtO)₂Si(CH₂)₃ S₂Bt, [C₁₂H₂₅O-(CH₂-CH₂O)₃](EtO)₂Si(CH₂)₃ S₂Bt, [C₁₂H₂₅O-(CH₂-CH₂O)₄](EtO)₂Si(CH₂)₃ S₂Bt, [C₁₂H₂₅O-(CH₂-CH₂O)₅](EtO)₂Si(CH₂)₃ S₂Bt, [C₁₂H₂₅O-(CH₂-CH₂O)₆](EtO)₂Si(CH₂)₃ S₂Bt, [C₁₃H₂₇O-(CH₂-CH₂O)₂](EtO)₂Si(CH₂)₃ S₂Bt, [C₁₃H₂₇O-(CH₂-CH₂O)₃](EtO)₂Si(CH₂)₃ S₂Bt, [C₁₃H₂₇O-(CH₂-CH₂O)₄](EtO)₂Si(CH₂)₃ S₂Bt, [C₁₃H₂₇O-(CH₂-CH₂O)₅](EtO)₂Si(CH₂)₃ S₂Bt, [C₁₃H₂₇O-(CH₂-CH₂O)₆](EtO)₂Si(CH₂)₃ S₂Bt, [C₁₄H₂₉O-(CH₂-CH₂O)₂](EtO)₂Si(CH₂)₃ S₂Bt, [C₁₄H₂₉O-(CH₂-CH₂O)₃](EtO)₂Si(CH₂)₃ S₂Bt, [C₁₄H₂₉O-(CH₂-CH₂O)₄](EtO)₂Si(CH₂)₃ S₂Bt, [C₁₄H₂₉O-(CH₂-CH₂O)₅](EtO)₂Si(CH₂)₃ S₂Bt, [C₁₄H₂₉O-(CH₂-CH₂O)₆](EtO)₂Si(CH₂)₃ S₂Bt, [C₁₅H₃₁O-(CH₂-CH₂O)₂](EtO)₂Si(CH₂)₃ S₂Bt, [C₁₅H₃₁O-(CH₂-CH₂O)₃](EtO)₂Si(CH₂)₃ S₂Bt, [C₁₅H₃₁O-(CH₂-CH₂O)₄](EtO)₂Si(CH₂)₃ S₂Bt, [C₁₅H₃₁O-(CH₂-CH₂O)₅](EtO)₂Si(CH₂)₃ S₂Bt, [C₁₅H₃₁O-(CH₂-CH₂O)₆](EtO)₂Si(CH₂)₃ S₂Bt, [C₁₆H₃₃O-(CH₂-CH₂O)₂](EtO)₂Si(CH₂)₃ S₂Bt, [C₁₆H₃₃O-(CH₂-CH₂O)₃](EtO)₂Si(CH₂)₃ S₂Bt, [C₁₆H₃₃O-(CH₂-CH₂O)₄](EtO)₂Si(CH₂)₃ S₂Bt, [C₁₆H₃₃O-(CH₂-CH₂O)₅](EtO)₂Si(CH₂)₃ S₂Bt, [C₁₆H₃₃O-(CH₂-CH₂O)₆](EtO)₂Si(CH₂)₃ S₂Bt, [C₁₇H₃₅O-(CH₂-CH₂O)₂](EtO)₂Si(CH₂)₃ S₂Bt, [C₁₇H₃₅O-(CH₂-CH₂O)_{3]}(EtO)₂Si(CH₂)₃ S₂Bt, [C₁₇H₃₅O-(CH₂-CH₂O)₄](EtO)₂Si(CH₂)₃ S₂Bt, [C₁₇H₃₅O-(CH₂-CH₂O)₅](EtO)₂Si(CH₂)₃ S₂Bt, [C₁₇H₃₅O-(CH₂-CH₂O)₆](EtO)₂Si(CH₂)₃ S₂Bt,
[C₁₁H₂₃O-(CH₂-CH₂O)₂]₂(EtO)Si(CH₂)₃ S₂Bt, [C₁₁H₂₃O-(CH₂-CH₂O)₃]₂(EtO)Si(CH₂)₃ S₂Bt, [C₁₁H₂₃O-(CH₂-CH₂O)₄]₂(EtO)Si(CH₂)₃ S₂Bt, [C₁₁H₂₃O-(CH₂-CH₂O)₅]₂(EtO)Si(CH₂)₃ S₂Bt, [C₁₁H₂₃O-(CH₂-CH₂O)₆]₂(EtO)Si(CH₂)₃ S₂Bt, [C₁₂H₂₅O-(CH₂-CH₂O)₂]₂(EtO)Si(CH₂)₃ S₂Bt, [C₁₂H₂₅O-(CH₂-CH₂O)₃]₂(EtO)Si(CH₂)₃ S₂Bt, [C₁₂H₂₅O-(CH₂-CH₂O)₄]₂(EtO)Si(CH₂)₃ S₂Bt, [C₁₂H₂₅O-(CH₂-CH₂O)₅]₂(EtO)Si(CH₂)₃ S₂Bt, [C₁₂H₂₅O-(CH₂-CH₂O)₆]₂(EtO)Si(CH₂)₃ S₂Bt, [C₁₃H₂₇O-(CH₂-CH₂O)₂]₂(EtO)Si(CH₂)₃ S₂Bt, [C₁₃H₂₇O-(CH₂-CH₂O)₃]₂(EtO)Si(CH₂)₃ S₂Bt, [C₁₃H₂₇O-(CH₂-CH₂O)₄]₂(EtO)Si(CH₂)₃ S₂Bt, [C₁₃H₂₇O-(CH₂-CH₂O)₅]₂(EtO)Si(CH₂)₃ S₂Bt, [C₁₃H₂₇O-(CH₂-CH₂O)₆]₂(EtO)Si(CH₂)₃ S₂Bt, [C₁₄H₂₉O-(CH₂-CH₂O)₂]₂(EtO)Si(CH₂)₃ S₂Bt, [C₁₄H₂₉O-(CH₂-CH₂O)₃]₂(EtO)Si(CH₂)₃ S₂Bt, [C₁₄H₂₉O-(CH₂-CH₂O)₄]₂(EtO)Si(CH₂)₃ S₂Bt, [C₁₄H₂₉O-(CH₂-CH₂O)₅]₂(EtO)Si(CH₂)₃ S₂Bt, [C₁₄H₂₉O-(CH₂-CH₂O)₆]₂(EtO)Si(CH₂)₃ S₂Bt, [C₁₅H₃₁O-(CH₂-CH₂O)₂]₂(EtO)Si(CH₂)₃ S₂Bt, [C₁₅H₃₁O-(CH₂-CH₂O)₃]₂(EtO)Si(CH₂)₃ S₂Bt, [C₁₅H₃₁O-(CH₂-CH₂O)₄]₂(EtO)Si(CH₂)₃ S₂Bt, [C₁₅H₃₁O-(CH₂-CH₂O)₅]₂(EtO)Si(CH₂)₃ S₂Bt, [C₁₅H₃₁O-(CH₂-CH₂O)₆]₂(EtO)Si(CH₂)₃ S₂Bt, [C₁₆H₃₃O-(CH₂-CH₂O)₂]₂(EtO)Si(CH₂)₃ S₂Bt, [C₁₆H₃₃O-(CH₂-CH₂O)₃]₂(EtO)Si(CH₂)₃ S₂Bt, [C₁₆H₃₃O-(CH₂-CH₂O)₄]₂(EtO)Si(CH₂)₃ S₂Bt, [C₁₆H₃₃O-(CH₂-CH₂O)₅]₂(EtO)Si(CH₂)₃ S₂Bt, [C₁₆H₃₃O-(CH₂-CH₂O)₆]₂(EtO)Si(CH₂)₃ S₂Bt, [C₁₇H₃₅O-(CH₂-CH₂O)₂]₂(EtO)Si(CH₂)₃ S₂Bt, [C₁₇H₃₅O-(CH₂-CH₂O)₃]₂(EtO)Si(CH₂)₃ S₂Bt, [C₁₇H₃₅O-(CH₂-CH₂O)₄]₂(EtO)Si(CH₂)₃ S₂Bt, [C₁₇H₃₅O-(CH₂-CH₂O)₅]₂(EtO)Si(CH₂)₃ S₂Bt, [C₁₇H₃₅O-(CH₂-CH₂O)₆]₂(EtO)Si(CH₂)₃ S₂Bt,
[C₁₁H₂₃O-(CH₂-CH₂O)₂]₃Si(CH₂)₃ S₂Bt, [C₁₁H₂₃O-(CH₂-CH₂O)₃]₃Si(CH₂)₃ S₂Bt, [C₁₁H₂₃O-(CH₂-CH₂O)₄]₃Si(CH₂)₃ S₂Bt, [C₁₁H₂₃O-(CH₂-CH₂O)₅]₃Si(CH₂)₃ S₂Bt, [C₁₁H₂₃O-(CH₂-CH₂O)₆]₃Si(CH₂)₃ S₂Bt, [C₁₂H₂₅O-(CH₂-CH₂O)₂]₃Si(CH₂)₃ S₂Bt, [C₁₂H₂₅O-(CH₂-CH₂O)₃]₃Si(CH₂)₃ S₂Bt, [C₁₂H₂₅O-(CH₂-CH₂O)₄]₃Si(CH₂)₃ S₂Bt, [C₁₂H₂₅O-(CH₂-CH₂O)₅]₃Si(CH₂)₃ S₂Bt, [C₁₂H₂₅O-(CH₂-CH₂O)₆]₃Si(CH₂)₃ S₂Bt, [C₁₃H₂₇O-(CH₂-CH₂O)₂]₃Si(CH₂)₃ S₂Bt, [C₁₃H₂₇O-(CH₂-CH₂O)₃]₃Si(CH₂)₃ S₂Bt, [C₁₃H₂₇O-(CH₂-CH₂O)₄]₃Si(CH₂)₃ S₂Bt, [C₁₃H₂₇O-(CH₂-CH₂O)₅]₃Si(CH₂)₃ S₂Bt, [C₁₃H₂₇O-(CH₂-CH₂O)₆]₃Si(CH₂)₃ S₂Bt, [C₁₄H₂₉O-(CH₂-CH₂O)₂]₃Si(CH₂)₃ S₂Bt, [C₁₄H₂₉O-(CH₂-CH₂O)₃]₃Si(CH₂)₃ S₂Bt, [C₁₄H₂₉O-(CH₂-CH₂O)₄]₃Si(CH₂)₃ S₂Bt, [C₁₄H₂₉O-(CH₂-CH₂O)₅]₃Si(CH₂)₃ S₂Bt, [C₁₄H₂₉O-(CH₂-CH₂O)₆]₃Si(CH₂)₃ S₂Bt, [C₁₅H₃₁O-(CH₂-CH₂O)₂]₃Si(CH₂)₃ S₂Bt, [C₁₅H₃₁O-(CH₂-CH₂O)₃]₃Si(CH₂)₃ S₂Bt, [C₁₅H₃₁O-(CH₂-CH₂O)₄]₃Si(CH₂)₃ S₂Bt, [C₁₅H₃₁O-(CH₂-CH₂O)₅]₃Si(CH₂)₃ S₂Bt, [C₁₅H₃₁O-(CH₂-CH₂O)₆]₃Si(CH₂)₃ S₂Bt, [C₁₆H₃₃O-(CH₂-CH₂O)₂]₃Si(CH₂)₃ S₂Bt, [C₁₆H₃₃O-(CH₂-CH₂O)₃]₃Si(CH₂)₃ S₂Bt, [C₁₆H₃₃O-(CH₂-CH₂O)₄]₃Si(CH₂)₃ S₂Bt, [C₁₆H₃₃O-(CH₂-CH₂O)₅]₃Si(CH₂)₃ S₂Bt, [C₁₆H₃₃O-(CH₂-CH₂O)₆]₃Si(CH₂)₃ S₂Bt, [C₁₇H₃₅O-(CH₂-CH₂O)₂]₃Si(CH₂)₃ S₂Bt, [C₁₇H₃₅O-(CH₂-CH₂O)₃]₃Si(CH₂)₃ S₂Bt, [C₁₇H₃₅O-(CH₂-CH₂O)₄]₃Si(CH₂)₃ S₂Bt, [C₁₇H₃₅O-(CH₂-CH₂O)₅]₃Si(CH₂)₃ S₂Bt, [C₁₇H₃₅O-(CH₂-CH₂O)₆]₃Si(CH₂)₃ S₂Bt,
[C₁₁H₂₃O-(CH₂-CH₂O)₂](EtO)₂Si(CH₂)₂C(CH₃)₂ S₂Bt, [C₁₁H₂₃O-(CH₂-CH₂O)₃](EtO)₂Si(CH₂)₂C(CH₃)₂ S₂Bt, [C₁₁H₂₃O-(CH₂-CH₂O)₄](EtO)₂Si(CH₂)₂C(CH₃)₂ S₂Bt, [C₁₁H₂₃O-(CH₂-CH₂O)₅](EtO)₂Si(CH₂)₂C(CH₃)₂ S₂Bt, [C₁₁H₂₃O-(CH₂-CH₂O)₆](EtO)₂Si(CH₂)₂C(CH₃)₂ S₂Bt, [C₁₂H₂₅O-(CH₂-CH₂O)₂](EtO)₂Si(CH₂)₂C(CH₃)₂ S₂Bt, [C₁₂H₂₅O-(CH₂-CH₂O)₃](EtO)₂Si(CH₂)₂C(CH₃)₂ S₂Bt, [C₁₂H₂₅O-(CH₂-CH₂O)₄](EtO)₂Si(CH₂)₂C(CH₃)₂ S₂Bt, [C₁₂H₂₅O-(CH₂-CH₂O)₅](EtO)₂Si(CH₂)₂C(CH₃)₂ S₂Bt, [C₁₂H₂₅O-(CH₂-CH₂O)₆](EtO)₂Si(CH₂)₂C(CH₃)₂ S₂Bt, [C₁₃H₂₇O-(CH₂-CH₂O)₂](EtO)₂Si(CH₂)₂C(CH₃)₂ S₂Bt, [C₁₃H₂₇O-(CH₂-CH₂O)₃](EtO)₂Si(CH₂)₂C(CH₃)₂ S₂Bt, [C₁₃H₂₇O-(CH₂-CH₂O)₄](EtO)₂Si(CH₂)₂C(CH₃)₂ S₂Bt, [C₁₃H₂₇O-(CH₂-CH₂O)₅](EtO)₂Si(CH₂)₂C(CH₃)₂ S₂Bt, [C₁₃H₂₇O-(CH₂-CH₂O)₆](EtO)₂Si(CH₂)₂C(CH₃)₂ S₂Bt, [C₁₄H₂₉O-(CH₂-CH₂O)₂](EtO)₂Si(CH₂)₂C(CH₃)₂ S₂Bt, [C₁₄H₂₉O-(CH₂-CH₂O)₃](EtO)₂Si(CH₂)₂C(CH₃)₂ S₂Bt, [C₁₄H₂₉O-(CH₂-CH₂O)₄](EtO)₂Si(CH₂)₂C(CH₃)₂ S₂Bt, [C₁₄H₂₉O-(CH₂-CH₂O)₅](EtO)₂Si(CH₂)₂C(CH₃)₂ S₂Bt, [C₁₄H₂₉O-(CH₂-CH₂O)₆](EtO)₂Si(CH₂)₂C(CH₃)₂ S₂Bt, [C₁₅H₃₁O-(CH₂-CH₂O)₂](EtO)₂Si(CH₂)₂C(CH₃)₂ S₂Bt, [C₁₅H₃₁O-(CH₂-CH₂O)₃](EtO)₂Si(CH₂)₂C(CH₃)₂ S₂Bt, [C₁₅H₃₁O-(CH₂-CH₂O)₄](EtO)₂Si(CH₂)₂C(CH₃)₂ S₂Bt, [C₁₅H₃₁O-(CH₂-CH₂O)₅](EtO)₂Si(CH₂)₂C(CH₃)₂ S₂Bt, [C₁₅H₃₁O-(CH₂-CH₂O)₆](EtO)₂Si(CH₂)₂C(CH₃)₂ S₂Bt, [C₁₆H₃₃O-(CH₂-CH₂O)₂](EtO)₂Si(CH₂)₂C(CH₃)₂ S₂Bt, [C₁₆H₃₃O-(CH₂-CH₂O)₃](EtO)₂Si(CH₂)₂C(CH₃)₂ S₂Bt, [C₁₆H₃₃O-(CH₂-CH₂O)₄](EtO)₂Si(CH₂)₂C(CH₃)₂ S₂Bt, [C₁₆H₃₃O-(CH₂-CH₂O)₅](EtO)₂Si(CH₂)₂C(CH₃)₂ S₂Bt, [C₁₆H₃₃O-(CH₂-CH₂O)₆](EtO)₂Si(CH₂)₂C(CH₃)₂ S₂Bt, [C₁₇H₃₅O-(CH₂-CH₂O)₂](EtO)₂Si(CH₂)₂C(CH₃)₂ S₂Bt, [C₁₇H₃₅O-(CH₂-CH₂O)₃](EtO)₂Si(CH₂)₂C(CH₃)₂ S₂Bt, [C₁₇H₃₅O-(CH₂-CH₂O)₄](EtO)₂Si(CH₂)₂C(CH₃)₂ S₂Bt, [C₁₇H₃₅O-(CH₂-CH₂O)₅](EtO)₂Si(CH₂)₂C(CH₃)₂ S₂Bt, [C₁₇H₃₅O-(CH₂-CH₂O)₆](EtO)₂Si(CH₂)₂C(CH₃)₂ S₂Bt,
[C₁₁H₂₃O-(CH₂-CH₂O)₂]₂(EtO)Si(CH₂)₂C(CH₃)₂ S₂Bt, [C₁₁H₂₃O-(CH₂-CH₂O)₃]₂(Et0)Si(CH₂)₂C(CH₃)₂ S₂Bt, [C₁₁H₂₃O-(CH₂-CH₂O)₄]₂(EtO)Si(CH₂)₂C(CH₃)₂ S₂Bt, [C₁₁H₂₃O-(CH₂-CH₂O)₅]₂(EtO)Si(CH₂)₂C(CH₃)₂ S₂Bt, [C₁₁H₂₃O-(CH₂-CH₂O)₆]₂(EtO)Si(CH₂)₂C(CH₃)₂ S₂Bt, [C₁₂H₂₅O-(CH₂-CH₂O)₂]₂(EtO)Si(CH₂)₂C(CH₃)₂ S₂Bt, [C₁₂H₂₅O-(CH₂-CH₂O)₃]₂(EtO)Si(CH₂)₂C(CH₃)₂ S₂Bt, [C₁₂H₂₅O-(CH₂-CH₂O)₄]₂(EtO)Si(CH₂)₂C(CH₃)₂ S₂Bt, [C₁₂H₂₅O-(CH₂-CH₂O)₅]₂(EtO)Si(CH₂)₂C(CH₃)₂ S₂Bt, [C₁₂H₂₅O-(CH₂-CH₂O)₆]₂(EtO)Si(CH₂)₂C(CH₃)₂ S₂Bt [C₁₃H₂₇O-(CH₂-CH₂O)₂]₂(EtO)Si(CH₂)₂C(CH₃)₂ S₂Bt, [C₁₃H₂₇O-(CH₂-CH₂O)₃]₂(EtO)Si(CH₂)₂C(CH₃)₂ S₂Bt, [C₁₃H₂₇O-(CH₂-CH₂O)₄]₂(EtO)Si(CH₂)₂C(CH₃)₂ S₂Bt, [C₁₃H₂₇O-(CH₂-CH₂O)₅]₂(EtO)Si(CH₂)₂C(CH₃)₂ S₂Bt, [C₁₃H₂₇O-(CH₂-CH₂O)₆]₂(EtO)Si(CH₂)₂C(CH₃)₂ S₂Bt, [C₁₄H₂₉O-(CH₂-CH₂O)₂]₂(EtO)Si(CH₂)₂C(CH₃)₂ S₂Bt, [C₁₄H₂₉O-(CH₂-CH₂O)₃]₂(EtO)Si(CH₂)₂C(CH₃)₂ S₂Bt, [C₁₄H₂₉O-(CH₂-CH₂O)₄]₂(EtO)Si(CH₂)₂C(CH₃)₂ S₂Bt, [C₁₄H₂₉O-(CH₂-CH₂O)₅]₂(EtO)Si(CH₂)₂C(CH₃)₂ S₂Bt, [C₁₄H₂₉O-(CH₂-CH₂O)₆]₂(EtO)Si(CH₂)₂C(CH₃)₂ S₂Bt, [C₁₅H₃₁O-(CH₂-CH₂O)₂]₂(EtO)Si(CH₂)₂C(CH₃)₂ S₂Bt, [C₁₅H₃₁O-(CH₂-CH₂O)₃]₂(EtO)Si(CH₂)₂C(CH₃)₂ S₂Bt, [C₁₅H₃₁O-(CH₂-CH₂O)₄]₂(EtO)Si(CH₂)₂C(CH₃)₂ S₂Bt, [C₁₅H₃₁O-(CH₂-CH₂O)₅]₂(EtO)Si(CH₂)₂C(CH₃)₂ S₂Bt, [C₁₅H₃₁O-(CH₂-CH₂O)₆]₂(EtO)Si(CH₂)₂C(CH₃)₂ S₂Bt, [C₁₆H₃₃O-(CH₂-CH₂O)₂]₂(EtO)Si(CH₂)₂C(CH₃)₂ S₂Bt, [C₁₆H₃₃O-(CH₂-CH₂O)₃]₂(EtO)Si(CH₂)₂C(CH₃)₂ S₂Bt, [C₁₆H₃₃O-(CH₂-CH₂O)₄]₂(EtO)Si(CH₂)₂C(CH₃)₂ S₂Bt, [C₁₆H₃₃O-(CH₂-CH₂O)₅]₂(EtO)Si(CH₂)₂C(CH₃)₂ S₂Bt, [C₁₆H₃₃O-(CH₂-CH₂O)₆]₂(EtO)Si(CH₂)₂C(CH₃)₂ S₂Bt, [C₁₇H₃₅O-(CH₂-CH₂O)₂]₂(EtO)Si(CH₂)₂C(CH₃)₂ S₂Bt, [C₁₇H₃₅O-(CH₂-CH₂O)₃]₂(EtO)Si(CH₂)₂C(CH₃)₂ S₂Bt, [C₁₇H₃₅O-(CH₂-CH₂O)₄]₂(EtO)Si(CH₂)₂C(CH₃)₂ S₂Bt, [C₁₇H₃₅O-(CH₂-CH₂O)₅]₂(EtO)Si(CH₂)₂C(CH₃)₂ S₂Bt, [C₁₇H₃₅O-(CH₂-CH₂O)₆]₂(EtO)Si(CH₂)₂C(CH₃)₂ S₂Bt,
[C₁₁H₂₃O-(CH₂-CH₂O)₂]₃Si(CH₂)₂C(CH₃)₂ S₂Bt, [C₁₁H₂₃O-(CH₂-CH₂O)₃]₃Si(CH₂)₂C(CH₃)₂ S₂Bt, [C₁₁H₂₃O-(CH₂-CH₂O)₄]₃Si(CH₂)₂C(CH₃)₂ S₂Bt, [C₁₁H₂₃O-(CH₂-CH₂O)₅]₃Si(CH₂)₂C(CH₃)₂ S₂Bt, [C₁₁H₂₃O-(CH₂-CH₂O)₆]₃Si(CH₂)₂C(CH₃)₂ S₂Bt, [C₁₂H₂₅O-(CH₂-CH₂O)₂]₃Si(CH₂)₂C(CH₃)₂ S₂Bt, [C₁₂H₂₅O-(CH₂-CH₂O)₃]₃Si(CH₂)₂C(CH₃)₂ S₂Bt, [C₁₂H₂₅O-(CH₂-CH₂O)₄]₃Si(CH₂)₂C(CH₃)₂ S₂Bt, [C₁₂H₂₅O-(CH₂-CH₂O)₅]₃Si(CH₂)₂C(CH₃)₂ S₂Bt, [C₁₂H₂₅O-(CH₂-CH₂O)₆]₃Si(CH₂)₂C(CH₃)₂ S₂Bt, [C₁₃H₂₇O-(CH₂-CH₂O)₂]₃Si(CH₂)₂C(CH₃)₂ S₂Bt, [C₁₃H₂₇O-(CH₂-CH₂O)₃]₃Si(CH₂)₂C(CH3)₂ S₂Bt, [C₁₃H₂₇O-(CH₂-CH₂O)₄]₃Si(CH₂)₂C(CH₃)₂ S₂Bt, [C₁₃H₂₇O-(CH₂-CH₂O)₅]₃Si(CH₂)₂C(CH₃)₂ S₂Bt, [C₁₃H₂₇O-(CH₂-CH₂O)₆]₃Si(CH₂)₂C(CH₃)₂ S₂Bt, [C₁₄H₂₉O-(CH₂-CH₂O)₂]₃Si(CH₂)₂C(CH₃)₂ S₂Bt, [C₁₄H₂₉O-(CH₂-CH₂O)₃]₃Si(CH₂)₂C(CH₃)₂ S₂Bt, [C₁₄H₂₉O-(CH₂-CH₂O)₄]₃Si(CH₂)₂C(CH₃)₂ S₂Bt, [C₁₄H₂₉O-(CH₂-CH₂O)₅]₃Si(CH₂)₂C(CH₃)₂ S₂Bt, [C₁₄H₂9O-(CH₂-CH₂O)₆]₃Si(CH₂)₂C(CH₃)₂ S₂Bt, [C₁₅H₃₁O-(CH₂-CH₂O)₂]₃Si(CH₂)₂C(CH₃)₂ S₂Bt, [C₁₅H₃₁O-(CH₂-CH₂O)₃]₃Si(CH₂)₂C(CH₃)₂ S₂Bt, [C₁₅H₃₁O-(CH₂-CH₂O)₄]₃Si(CH₂)₂C(CH₃)₂ S₂Bt, [C₁₅H₃₁O-(CH₂-CH₂O)₅]₃Si(CH₂)₂C(CH₃)₂ S₂Bt, [C₁₅H₃₁O-(CH₂-CH₂O)₆]₃Si(CH₂)₂C(CH₃)₂ S₂Bt, [C₁₆H₃₃O-(CH₂-CH₂O)₂]₃Si(CH₂)₂C(CH₃)₂ S₂Bt, [C₁₆H₃₃O-(CH₂-CH₂O)₃]₃Si(CH₂)₂C(CH₃)₂ S₂Bt, [C₁₆H₃₃O-(CH₂-CH₂O)₄]₃Si(CH₂)₂C(CH₃)₂ S₂Bt, [C₁₆H₃₃O-(CH₂-CH₂O)₅]₃Si(CH₂)₂C(CH₃)₂ S₂Bt, [C₁₆H₃₃O-(CH₂-CH₂O)₆]₃Si(CH₂)₂C(CH₃)₂ S₂Bt, [C₁₇H₃₅O-(CH₂-CH₂O)₂]₃Si(CH₂)₂C(CH₃)₂ S₂Bt, [C₁₇H₃₅O-(CH₂-CH₂O)₃]₃Si(CH₂)₂C(CH₃)₂ S₂Bt, [C₁₇H₃₅O-(CH₂-CH₂O)₄]₃Si(CH₂)₂C(CH₃)₂ S₂Bt, [C₁₇H₃₅O-(CH₂-CH₂O)₅]₃Si(CH₂)₂C(CH₃)₂ S₂Bt, [C₁₇H₃₅O-(CH₂-CH₂O)₆]₃Si(CH₂)₂C(CH₃)₂ S₂Bt,
[C₁₁H₂₃O-(CH₂-CH₂O)₂](EtO)₂Si(CH₂)₃ S₃Bt, [C₁₁H₂₃O-(CH₂-CH₂O)₃](EtO)₂Si(CH₂)₃ S₃Bt, [C₁₁H₂₃O-(CH₂-CH₂O)₄](EtO)₂Si(CH₂)₃ S₃Bt, [C₁₁H₂₃O-(CH₂-CH₂O)₅](EtO)₂Si(CH₂)₃ S₃Bt, [C₁₁H₂₃O-(CH₂-CH₂O)₆](EtO)₂Si(CH₂)₃ S₃Bt, [C₁₂H₂₅O-(CH₂-CH₂O)₂](EtO)₂Si(CH₂)₃ S₃Bt, [C₁₂H₂₅O-(CH₂-CH₂O)₃](EtO)₂Si(CH₂)₃ S₃Bt, [C₁₂H₂₅O-(CH₂-CH₂O)₄](EtO)₂Si(CH₂)₃ S₃Bt, [C₁₂H₂₅O-(CH₂-CH₂O)₅](EtO)₂Si(CH₂)₃ S₃Bt, [C₁₂H₂₅O-(CH₂-CH₂O)₆](EtO)₂Si(CH₂)₃ S₃Bt, [C₁₃H₂₇O-(CH₂-CH₂O)₂](EtO)₂Si(CH₂)₃ S₃Bt, [C₁₃H₂₇O-(CH₂-CH₂O)₃](EtO)₂Si(CH₂)₃ S₃Bt, [C₁₃H₂₇O-(CH₂-CH₂O)₄](EtO)₂Si(CH₂)₃ S₃Bt, [C₁₃H₂₇O-(CH₂-CH₂O)₅](EtO)₂Si(CH₂)₃ S₃Bt, [C₁₃H₂₇O-(CH₂-CH₂O)₆](EtO)₂Si(CH₂)₃ S₃Bt, [C₁₄H₂₉O-(CH₂-CH₂O)₂](EtO)₂Si(CH₂)₃ S₃Bt, [C₁₄H₂₉O-(CH₂-CH₂O)₃](EtO)₂Si(CH₂)₃ S₃Bt, [C₁₄H₂₉O-(CH₂-CH₂O)₄](EtO)₂Si(CH₂)₃ S₃Bt, [C₁₄H₂₉O-(CH₂-CH₂O)₅](EtO)₂Si(CH₂)₃ S₃Bt, [C₁₄H₂₉O-(CH₂-CH₂O)₆](EtO)₂Si(CH₂)₃ S₃Bt, [C₁₅H₃₁O-(CH₂-CH₂O)₂](EtO)₂Si(CH₂)₃ S₃Bt, [C₁₅H₃₁O-(CH₂-CH₂O)₃](EtO)₂Si(CH₂)₃ S₃Bt, [C₁₅H₃₁O-(CH₂-CH₂O)₄](EtO)₂Si(CH₂)₃ S₃Bt, [C₁₅H₃₁O-(CH₂-CH₂O)₅](EtO)₂Si(CH₂)₃ S₃Bt, [C₁₅H₃₁O-(CH₂-CH₂O)₆](EtO)₂Si(CH₂)₃ S₃Bt, [C₁₆H₃₃O-(CH₂-CH₂O)₂](EtO)₂Si(CH₂)₃ S₃Bt, [C₁₆H₃₃O-(CH₂-CH₂O)₃](EtO)₂Si(CH₂)₃ S₃Bt, [C₁₆H₃₃O-(CH₂-CH₂O)₄](EtO)₂Si(CH₂)₃ S₃Bt, [C₁₆H₃₃O-(CH₂-CH₂O)₅](EtO)₂Si(CH₂)₃ S₃Bt, [C₁₆H₃₃O-(CH₂-CH₂O)₆](EtO)₂Si(CH₂)₃ S₃Bt, [C₁₇H₃₅O-(CH₂-CH₂O)₂](EtO)₂Si(CH₂)₃ S₃Bt, [C₁₇H₃₅O-(CH₂-CH₂O)₃](EtO)₂Si(CH₂)₃ S₃Bt, [C₁₇H₃₅O-(CH₂-CH₂O)₄](EtO)₂Si(CH₂)₃ S₃Bt, [C₁₇H₃₅O-(CH₂-CH₂O)₅](EtO)₂Si(CH₂)₃ S₃Bt, [C₁₇H₃₅O-(CH₂-CH₂O)₆](EtO)₂Si(CH₂)₃ S₃Bt,
[C₁₁H₂₃O-(CH₂-CH₂O)₂]₂(EtO)Si(CH₂)₃ S₃Bt, [C₁₁H₂₃O-(CH₂-CH₂O)₃]₂(EtO)Si(CH₂)₃ S₃Bt, [C₁₁H₂₃O-(CH₂-CH₂O)₄]₂(EtO)Si(CH₂)₂ S₃Bt, [C₁₁H₂₃O-(CH₂-CH₂O)₅]₂(EtO)Si(CH₂)₃ S₃Bt, [C₁₁H₂₃O-(CH₂-CH₂O)₆]₂(EtO)Si(CH₂)₃ S₃Bt, [C₁₂H₂₅O-(CH₂-CH₂O)₂]₂(EtO)Si(CH₂)₃ S₃Bt, [C₁₂H₂₅O-(CH₂-CH₂O)₃]₂(EtO)Si(CH₂)₃ S₃Bt, [C₁₂H₂₅O-(CH₂-CH₂O)₄]₂(EtO)Si(CH₂)₃ S₃Bt, [C₁₂H₂₅O-(CH₂-CH₂O)₅]₂(EtO)Si(CH₂)₃ S₃Bt, [C₁₂H₂₅O-(CH₂-CH₂O)₆]₂(EtO)Si(CH₂)₃ S₃Bt, [C₁₃H₂₇O-(CH₂-CH₂O)₂]₂(EtO)Si(CH₂)₃ S₃Bt, [C₁₃H₂₇O-(CH₂-CH₂O)₃]₂(EtO)Si(CH₂)₃ S₃Bt, [C₁₃H₂₇O-(CH₂-CH₂O)₄]₂(EtO)Si(CH₂)₃ S₃Bt, [C₁₃H₂₇O-(CH₂-CH₂O)₅]₂(EtO)Si(CH₂)₃ S₃Bt, [C₁₃H₂₇O-(CH₂-CH₂O)₆]₂(EtO)Si(CH₂)₃ S₃Bt, [C₁₄H₂₉O-(CH₂-CH₂O)₂]₂(EtO)Si(CH₂)₃ S₃Bt, [C₁₄H₂₉O-(CH₂-CH₂O)₃]₂(EtO)Si(CH₂)₃ S₃Bt, [C₁₄H₂₉O-(CH₂-CH₂O)₄]₂(EtO)Si(CH₂)₃ S₃Bt, [C₁₄H₂₉O-(CH₂-CH₂O)₅]₂(EtO)Si(CH₂)₃ S₃Bt, [C₁₄H₂₉O-(CH₂-CH₂O)₆]₂(EtO)Si(CH₂)₃ S₃Bt, [C₁₅H₃₁O-(CH₂-CH₂O)₂]₂(EtO)Si(CH₂)₃ S₃Bt, [C₁₅H₃₁O-(CH₂-CH₂O)₃]₂(EtO)Si(CH₂)₃ S₃Bt, [C₁₅H₃₁O-(CH₂-CH₂O)₄]₂(EtO)Si(CH₂)₃ S₃Bt, [C₁₅H₃₁O-(CH₂-CH₂O)₅]₂(EtO)Si(CH₂)₃ S₃Bt, [C₁₅H₃₁O-(CH₂-CH₂O)₆]₂(EtO)Si(CH₂)₃ S₃Bt, [C₁₆H₃₃O-(CH₂-CH₂O)₂]₂(EtO)Si(CH₂)₃ S₃Bt, [C₁₆H₃₃O-(CH₂-CH₂O)₃]₂(EtO)Si(CH₂)₃ S₃Bt, [C₁₆H₃₃O-(CH₂-CH₂O)₄]₂(EtO)Si(CH₂)₃ S₃Bt, [C₁₆H₃₃O-(CH₂-CH₂O)₅]₂(EtO)Si(CH₂)₃ S₃Bt, [C₁₆H₃₃O-(CH₂-CH₂O)₆]₂(EtO)Si(CH₂)₃ S₃Bt, [C₁₇H₃₅O-(CH₂-CH₂O)₂]₂(EtO)Si(CH₂)₃ S₃Bt, [C₁₇H₃₅O-(CH₂-CH₂O)₃]₂(EtO)Si(CH₂)₃ S₃Bt, [C₁₇H₃₅O-(CH₂-CH₂O)₄]₂(EtO)Si(CH₂)₃ S₃Bt, [C₁₇H₃₅O-(CH₂-CH₂O)₅]₂(EtO)Si(CH₂)₃ S₃Bt, [C₁₇H₃₅O-(CH₂-CH₂O)₆]₂(EtO)Si(CH₂)₃ S₃Bt,
[C₁₁H₂₃O-(CH₂-CH₂O)₂]₃Si(CH₂)₃ S₃Bt, [C₁₁H₂₃O-(CH₂-CH₂O)₃]₃Si(CH₂)₃ S₃Bt, [C₁₁H₂₃O-(CH₂-CH₂O)₄]₃Si(CH₂)₃ S₃Bt, [C₁₁H₂₃O-(CH₂-CH₂O)₅]₃Si(CH₂)₃ S₃Bt, [C₁₁H₂₃O-(CH₂-CH₂O)₆]₃Si(CH₂)₃ S₃Bt, [C₁₂H₂₅O-(CH₂-CH₂O)₂]₃Si(CH₂)₃ S₃Bt, [C₁₂H₂₅O-(CH₂-CH₂O)₃]₃Si(CH₂)₃ S₃Bt, [C₁₂H₂₅O-(CH₂-CH₂O)₄]₃Si(CH₂)₃ S₃Bt, [C₁₂H₂₅O-(CH₂-CH₂O)₅]₃Si(CH₂)₃ S₃Bt, [C₁₂H₂₅O-(CH₂-CH₂O)₆]₃Si(CH₂)₃ S₃Bt, [C₁₃H₂₇O-(CH₂-CH₂O)₂]₃Si(CH₂)₃ S₃Bt, [C₁₃H₂₇O-(CH₂-CH₂O)₃]₃Si(CH₂)₃ S₃Bt, [C₁₃H₂₇O-(CH₂-CH₂O)₄]₃Si(CH₂)₃ S₃Bt, [C₁₃H₂₇O-(CH₂-CH₂O)₅]₃Si(CH₂)₃ S₃Bt, [C₁₃H₂₇O-(CH₂-CH₂O)₆]₃Si(CH₂)₃ S₃Bt, [C₁₄H₂₉O-(CH₂-CH₂O)₂]₃Si(CH₂)₃ S₃Bt, [C₁₄H₂₉O-(CH₂-CH₂O)₃]₃Si(CH₂)₃ S₃Bt, [C₁₄H₂₉O-(CH₂-CH₂O)₄]₃Si(CH₂)₃ S₃Bt, [C₁₄H₂₉O-(CH₂-CH₂O)₅]₃Si(CH₂)₃ S₃Bt, [C₁₄H₂₉O-(CH₂-CH₂O)₆]₃Si(CH₂)₃ S₃Bt, [C₁₅H₃₁O-(CH₂-CH₂O)₂]₃Si(CH₂)₃ S₃Bt, [C₁₅H₃₁O-(CH₂-CH₂O)₃]₃Si(CH₂)₃ S₃Bt, [C₁₅H₃₁O-(CH₂-CH₂O)₄]₃Si(CH₂)₃ S₃Bt, [C₁₅H₃₁O-(CH₂-CH₂O)₅]₃Si(CH₂)₃ S₃Bt, [C₁₅H₃₁O-(CH₂-CH₂O)₆]₃Si(CH₂)₃ S₃Bt, [C₁₆H₃₃O-(CH₂-CH₂O)₂]₃Si(CH₂)₃ S₃Bt, [C₁₆H₃₃O-(CH₂-CH₂O)₃]₃Si(CH₂)₃ S₃Bt, [C₁₆H₃₃O-(CH₂-CH₂O)4]₃Si(CH₂)₃ S₃Bt, [C₁₆H₃₃O-(CH₂-CH₂O)₅]₃Si(CH₂)₃ S₂Bt, [C₁₆H₃₃O-(CH₂-CH₂O)₆]₃Si(CH₂)₃ S₃Bt, [C₁₇H₃₅O-(CH₂-CH₂O)₂]₃Si(CH₂)₃ S₃Bt, [C₁₇H₃₅O-(CH₂-CH₂O)₃]₃Si(CH₂)₃ S₃Bt, [C₁₇H₃₅O-(CH₂-CH₂O)₄]₃Si(CH₂)₃ S₃Bt, [C₁₇H₃₅O-(CH₂-CH₂O)₅]₃Si(CH₂)₃ S₃Bt, [C₁₇H₃₅O-(CH₂-CH₂O)₆]₃Si(CH₂)₃ S₃Bt,
[C₁₁H₂₃O-(CH₂-CH₂O)₂](EtO)₂Si(CH₂)₂C(CH₃)₂ S₃Bt, [C₁₁H₂₃O-(CH₂-CH₂O)₃](EtO)₂Si(CH₂)₂C(CH₃)₂ S₃Bt, [C₁₁H₂₃O-(CH₂-CH₂O)₄]EtO)₂Si(CH₂)₂C(CH₃)₂ S₃Bt, [C₁₁H₂₃O-(CH₂-CH₂O)₅] EtO)₂Si(CH₂)₂C(CH₃)₂ S₃Bt, [C₁₁H₂₃O-(CH₂-CH₂O)₆] EtO)₂Si(CH₂)₂C(CH₃)₂ S₃Bt, [C₁₂H₂₅O-(CH₂-CH₂O)₂](EtO)₂Si(CH₂)₂C(CH₃)₂ S₃Bt, [C₁₂H₂₅O-(CH₂-CH₂O)₃](EtO)₂Si(CH₂)₂C(CH₃)₂ S₃Bt, [C₁₂H₂₅O-(CH₂-CH₂O)₄](EtO)₂Si(CH₂)₂C(CH₃)₂ S₃Bt, [C₁₂H₂₅O-(CH₂-CH₂O)₅](EtO)₂Si(CH₂)₂C(CH₃)₂ S₃Bt, [C₁₂H₂₅O-(CH₂-CH₂O)₆](EtO)₂Si(CH₂)₂C(CH₃)₂ S₃Bt, [C₁₃H₂₇O-(CH₂-CH₂O)₂](EtO)₂Si(CH₂)₂C(CH₃)₂ S₃Bt, [C₁₃H₂₇O-(CH₂-CH₂O)₃](EtO)₂Si(CH₂)₂C(CH₃)₂ S₃Bt, [C₁₃H₂₇O-(CH₂-CH₂O)₄](EtO)₂Si(CH₂)₂C(CH₃)₂ S₃Bt, [C₁₃H₂₇O-(CH₂-CH₂O)₅](EtO)₂Si(CH₂)₂C(CH₃)₂ S₃Bt, [C₁₃H₂₇O-(CH₂-CH₂O)₆](EtO)₂Si(CH₂)₂C(CH₃)₂ S₃Bt, [C₁₄H₂₉O-(CH₂-CH₂O)₂](EtO)₂Si(CH₂)₂C(CH₃)₂ S₃Bt, [C₁₄H₂₉O-(CH₂-CH₂O)₃](EtO)₂Si(CH₂)₂C(CH₃)₂ S₃Bt, [C₁₄H₂₉O-(CH₂-CH₂O)₄](EtO)₂Si(CH₂)₂C(CH₃)₂ S₃Bt, [C₁₄H₂₉O-(CH₂-CH₂O)₅](EtO)₂SiCH₂)₂C(CH₃)₂ S₃Bt, [C₁₄H₂₉O-(CH₂-CH₂O)₆](EtO)₂Si CH₂)₂C(CH₃)₂ S₃Bt, [C₁₅H₃₁O-(CH₂-CH₂O)₂](EtO)₂Si(CH₂)₂C(CH₃)₂ S₃Bt, [C₁₅H₃₁O-(CH₂-CH₂O)₃](EtO)₂Si(CH₂)₂C(CH₃)₂ S₃Bt, [C₁₅H₃₁O-(CH₂-CH₂O)₄](EtO)₂Si(CH₂)₂C(CH₃)₂ S₃Bt, [C₁₅H₃₁O-(CH₂-CH₂O)₅](EtO)₂Si(CH₂)₂C(CH₃)₂ S₃Bt, [C₁₅H₃₁O-(CH₂-CH₂O)₆](EtO)₂Si(CH₂)₂C(CH₃)₂ S₃Bt, [C₁₆H₃₃O-(CH₂-CH₂O)₂](EtO)₂Si(CH₂)₂C(CH₃)₂ S₃Bt, [C₁₆H₃₃O-(CH₂-CH₂O)₃](EtO)₂Si(CH₂)₂C(CH₃)₂ S₃Bt, [C₁₆H₃₃O-(CH₂-CH₂O)₄](EtO)₂Si(CH₂)₂C(CH₃)₂ S₃Bt, [C₁₆H₃₃O-(CH₂-CH₂O)₅](EtO)₂Si(CH₂)₂C(CH₃)₂ S₃Bt, [C₁₆H₃₃O-(CH₂-CH₂O)₆](EtO)₂Si(CH₂)₂C(CH₃)₂ S₃Bt, [C₁₇H₃₅O-(CH₂-CH₂O)₂](EtO)₂Si(CH₂)₂C(CH₃)₂ S₃Bt, [C₁₇H₃₅O-(CH₂-CH₂O)₃](EtO)₂Si(CH₂)₂C(CH₃)₂ S₃Bt, [C₁₇H₃₅O-(CH₂-CH₂O)₄](EtO)₂Si(CH₂)₂C(CH₃)₂ S₃Bt, [C₁₇H₃₅O-(CH₂-CH₂O)₅](EtO)₂Si(CH₂)₂C(CH₃)₂ S₃Bt, [C₇H₃₅O-(CH₂-CH₂O)₆](EtO)₂Si(CH₂)₂C(CH₃)₂ S₃Bt,
[C₁₁H₂₃O-(CH₂-CH₂O)₂]₂(EtO)Si(CH₂)₂C(CH₃)₂ S₃Bt, [C₁₁H₂₃O-(CH₂-CH₂O)₃]₂(EtO)Si(CH₂)₂C(CH₃)₂ S₃Bt, [C₁₁H₂₃O-(CH₂-CH₂O)₄]₂(EtO)Si(CH₂)₂C(CH₃)₂ S₃Bt, [C₁₁H₂₃O-(CH₂-CH₂O)₅]₂(EtO)Si(CH₂)₂C(CH₃)₂ S₃Bt, [C₁₁H₂₃O-(CH₂-CH₂O)₆]₂(EtO)Si(CH₂)₂C(CH₃)₂ S₃Bt, [C₁₂H₂₅O-(CH₂-CH₂O)₂]₂(EtO)Si(CH₂)₂C(CH₃)₂ S₃Bt, [C₁₂H₂₅O-(CH₂-CH₂O)₃]₂(EtO)Si(CH₂)₂C(CH₃)₂ S₃Bt, [C₁₂H₂₅O-(CH₂-CH₂O)₄]₂(EtO)Si(CH₂)₂C(CH₃)₂ S₃Bt, [C₁₂H₂₅O-(CH₂-CH₂O)₅]₂(EtO)Si(CH₂)₂C(CH₃)₂ S₃Bt, [C₁₂H₂₅O-(CH₂-CH₂O)₆]₂(EtO)Si(CH₂)₂C(CH₃)₂ S₃Bt, [C₁₃H₂₇O-(CH₂-CH₂O)₂]₂(EtO)Si(CH₂)₂C(CH₃)₂ S₃Bt, [C₁₃H₂₇O-(CH₂-CH₂O)₃]₂(EtO)Si(CH₂)₂C(CH₃)₂ S₃Bt, [C₁₃H₂₇O-(CH₂-CH₂O)₄]₂(EtO)Si(CH₂)₂C(CH₃)₂ S₃Bt, [C₁₃H₂₇O-(CH₂-CH₂O)₅]₂(EtO)Si(CH₂)₂C(CH₃)₂ S₃Bt, [C₁₃H₂₇O-(CH₂-CH₂O)₆]₂(EtO)Si(CH₂)₂C(CH₃)₂ S₃Bt, [C₁₄H₂₉O-(CH₂-CH₂O)₂]₂(EtO)Si(CH₂)₂C(CH₃)₂ S₃Bt, [C₁₄H₂₉O-(CH₂-CH₂O)₃]₂(EtO)Si(CH₂)₂C(CH₃)₂ S₃Bt, [C₁₄H₂₉O-(CH₂-CH₂O)₄]₂(EtO)Si(CH₂)₂C(CH₃)₂ S₃Bt, [C₁₄H₂₉O-(CH₂-CH₂O)₅]₂(EtO)Si(CH₂)₂C(CH₃)₂ S₃Bt, [C₁₄H₂₉O-(CH₂-CH₂O)₆]₂(EtO)Si(CH₂)₂C(CH₃)₂ S₃Bt, [C₁₅H₃₁O-(CH₂-CH₂O)₂]₂(EtO)Si(CH₂)₂C(CH₃)₂ S₃Bt, [C₁₅H₃₁O-(CH₂-CH₂O)₃]₂(EtO)Si(CH₂)₂C(CH₃)₂ S₃Bt, [C₁₅H₃₁O-(CH₂-CH₂O)₄]₂(EtO)Si(CH₂)₂C(CH₃)₂ S₃Bt, [C₁₅H₃₁O-(CH₂-CH₂O)₅]₂(EtO)Si(CH₂)₂C(CH₃)₂ S₃Bt, [C₁₅H₃₁O-(CH₂-CH₂O)₆]₂(EtO)Si(CH₂)₂C(CH₃)₂ S₃Bt, [C₁₆H₃₃O-(CH₂-CH₂O)₂]₂(EtO)Si(CH₂)₂C(CH₃)₂ S₃Bt, [C₁₆H₃₃O-(CH₂-CH₂O)₃]₂(EtO)Si(CH₂)₂C(CH₃)₂ S₃Bt, [C₁₆H₃₃O-(CH₂-CH₂O)₄]₂(EtO)Si(CH₂)₂C(CH₃)₂ S₃Bt, [C₁₆H₃₃O-(CH₂-CH₂O)₅]₂(EtO)Si(CH₂)₂C(CH₃)₂ S₃Bt, [C₁₆H₃₃O-(CH₂-CH₂O)₆]₂(EtO)Si(CH₂)₂C(CH₃)₂ S₃Bt, [C₁₇H₃₅O-(CH₂-CH₂O)₂]₂(EtO)Si(CH₂)₂C(CH₃)₂ S₃Bt, [C₁₇H₃₅O-(CH₂-CH₂O)₃]₂(EtO)Si(CH₂)₂C(CH₃)₂ S₃Bt, [C₁₇H₃₅O-(CH₂-CH₂O)₄]₂(EtO)Si(CH₂)₂C(CH₃)₂ S₃Bt, [C₁₇H₃₅O-(CH₂-CH₂O)₅]₂(EtO)Si(CH₂)₂C(CH₃)₂ S₃Bt, [C₁₇H₃₅O-(CH₂-CH₂O)₆]₂(EtO)Si(CH₂)₂C(CH₃)₂ S₃Bt,
[C₁₁H₂₃O-(CH₂-CH₂O)₂]₃Si(CH₂)₂C(CH₃)₂ S₃Bt, [C₁₁H₂₃O-(CH₂-CH₂O)₃]₃Si(CH₂)₂C(CH₃)₂ S₃Bt, [C₁₁H₂₃O-(CH₂-CH₂O)₄]₃Si(CH₂)₂C(CH₃)₂ S₃Bt, [C₁₁H₂₃O-(CH₂-CH₂O)₅]₃Si(CH₂)₂C(CH₃)₂ S₃Bt, [C₁₁H₂₃O-(CH₂-CH₂O)₆]₃Si(CH₂)₂C(CH₃)₂ S₃Bt, [C₁₂H₂₅O-(CH₂-CH₂O)₂]₃Si(CH₂)₂C(CH₃)₂ S₃Bt, [C₁₂H₂₅O-(CH₂-CH₂O)₃]₃Si(CH₂)₂C(CH₃)₂ S₃Bt, [C₁₂H₂₅O-(CH₂-CH₂O)₄]₃Si(CH₂)₂C(CH₃)₂ S3Bt, [C₁₂H₂₅O-(CH₂-CH₂O)₅]₃Si(CH₂)₂C(CH₃)₂ S₃Bt, [C₁₂H₂₅O-(CH₂-CH₂O)₆]₃Si(CH₂)₂C(CH₃)₂ S₃Bt, [C₁₃H₂₇O-(CH₂-CH₂O)₂]₃Si(CH₂)₂C(CH₃)₂ S₃Bt, [C₁₃H₂₇O-(CH₂-CH₂O)₃]₃Si(CH₂)₂C(CH₃)₂ S₃Bt, [C₁₃H₂₇O-(CH₂-CH₂O)₄]₃Si(CH₂)₂C(CH₃)₂ S₃Bt, [C₁₃H₂₇O-(CH₂-CH₂O)₅]₃Si(CH₂)₂C(CH₃)₂ S₃Bt, [C₁₃H₂₇O-(CH₂-CH₂O)₆]₃Si(CH₂)₂C(CH₃)₂ S₃Bt, [C₁₄H₂₉O-(CH₂-CH₂O)₂]₃Si(CH₂)₂C(CH₃)₂ S₃Bt, [C₁₄H₂₉O-(CH₂-CH₂O)₃]₃Si(CH₂)₂C(CH₃)₂ S₃Bt, [C₁₄H₂₉O-(CH₂-CH₂O)₄]₃Si(CH₂)₂C(CH₃)₂ S₃Bt, [C₁₄H₂₉O-(CH₂-CH₂O)₅]₃Si CH₂)₂C(CH₃)₂ S₃Bt, [C₁₄H₂₉O-(CH₂-CH₂O)₆]₃Si CH2)2C(CH3)2 S₃Bt, [C₁₅H₃₁O-(CH₂-CH₂O)₂]₃Si(CH₂)₂C(CH₃)₂ S₃Bt, [C₁₅H₃₁O-(CH₂-CH₂O)₃]₃Si(CH₂)₂C(CH₃)₂ S₃Bt, [C₁₅H₃₁O-(CH₂-CH₂O)₄]₃Si(CH₂)₂C(CH₃)₂ S₃Bt, [C₁₅H₃₁O-(CH₂-CH₂O)₅]₃Si(CH₂)₂C(CH₃)₂ S₃Bt, [C₁₅H₃₁O-(CH₂-CH₂O)₆]₃Si(CH₂)₂C(CH₃)₂ S₃Bt, [C₁₆H₃₃O-(CH₂-CH₂O)₂]₃Si(CH₂)₂C(CH₃)₂ S₃Bt, [C₁₆H₃₃O-(CH₂-CH₂O)₃]₃Si(CH₂)₂C(CH₃)₂ S₃Bt, [C₁₆H₃₃O-(CH₂-CH₂O)₄]₃Si(CH₂)₂C(CH₃)₂ S₃Bt, [C₁₆H₃₃O-(CH₂-CH₂O)₅]₃Si(CH₂)₂C(CH₃)₂ S₃Bt, [C₁₆H₃₃O-(CH₂-CH₂O)₆]₃Si(CH₂)₂C(CH₃)₂ S₃Bt, [C₁₇H₃₅O-(CH₂-CH₂O)₂]₃Si(CH₂)₂C(CH₃)₂ S₃Bt, [C₁₇H₃₅O-(CH₂-CH₂O)₃]₃Si(CH₂)₂C(CH₃)₂ S₃Bt, [C₁₇H₃₅O-(CH₂-CH₂O)₄]₃Si(CH₂)₂C(CH₃)₂ S₃Bt, [C₁₇H₃₅O-(CH₂-CH₂O)₅]₃Si(CH₂)₂C(CH₃)₂ S₃Bt, [C₁₇H₃₅O-(CH₂-CH₂O)₆]₃Si(CH₂)₂C(CH₃)₂ S₃Bt,
[C₁₁H₂₃O-(CH₂-CH₂O)₂](EtO)₂Si(CH₂)₃S₄Bt, [C₁₁H₂₃O-(CH₂-CH₂O)₃](EtO)₂Si(CH₂)₃ S₄Bt, [C₁₁H₂₃O-(CH₂-CH₂O)₄](EtO)₂Si(CH₂)₃ S₄Bt, [C₁₁H₂₃O-(CH₂-CH₂O)₅](EtO)₂Si(CH₂)₃ S₄Bt, [C₁₁H₂₃O-(CH₂-CH₂O)₆](EtO)₂Si(CH₂)₃ S₄Bt, [C₁₂H₂₅O-(CH₂-CH₂O)₂](EtO)₂Si(CH₂)₃ S₄Bt, [C₁₂H₂₅O-(CH₂-CH₂O)₃](EtO)₂Si(CH₂)₃ S₄Bt, [C₁₂H₂₅O-(CH₂-CH₂O)₄](EtO)₂Si(CH₂)₃ S₄Bt, [C₁₂H₂₅O-(CH₂-CH₂O)₅](EtO)₂Si(CH₂)₃ S₄Bt, [C₁₂H₂₅O-(CH₂-CH₂O)₆](EtO)₂Si(CH₂)₃ S₄Bt, [C₁₃H₂₇O-(CH₂-CH₂O)₂](EtO)₂Si(CH₂)₃ S₄Bt, [C₁₃H₂₇O-(CH₂-CH₂O)₃](EtO)₂Si(CH₂)₃ S₄Bt, [C₁₃H₂₇O-(CH₂-CH₂O)₄](EtO)₂Si(CH₂)₃ S₄Bt, [C₁₃H₂₇O-(CH₂-CH₂O)₅](EtO)₂Si(CH₂)₃ S₄Bt, [C₁₃H₂₇O-(CH₂-CH₂O)₆](EtO)₂Si(CH₂)₃ S₄Bt, [C₁₄H₂₉O-(CH₂-CH₂O)₂](EtO)₂Si(CH₂)₃ S₄Bt, [C₁₄H₂₉O-(CH₂-CH₂O)₃](EtO)₂Si(CH₂)₃ S₄Bt, [C₁₄H₂₉O-(CH₂-CH₂O)₄](EtO)₂Si(CH₂)₃ S₄Bt, [C₁₄H₂₉O-(CH₂-CH₂O)₅](EtO)₂Si(CH₂)₃ S₄Bt, [C₁₄H₂₉O-(CH₂-CH₂O)₆](EtO)₂Si(CH₂)₃ S₄Bt, [C₁₅H₃₁O-(CH₂-CH₂O)₂](EtO)₂Si(CH₂)₃ S₄Bt, [C₁₅H₃₁O-(CH₂-CH₂O)₃](EtO)₂Si(CH₂)₃ S₄Bt, [C₁₅H₃₁O-(CH₂-CH₂O)₄](EtO)₂Si(CH₂)₃ S₄Bt, [C₁₅H₃₁O-(CH₂-CH₂O)₅](EtO)₂Si(CH₂)₃ S₄Bt, [C₁₅H₃₁O-(CH₂-CH₂O)₆](EtO)₂Si(CH₂)₃ S₄Bt, [C₁₆H₃₃O-(CH₂-CH₂O)₂](EtO)₂Si(CH₂)₃ S₄Bt, [C₁₆H₃₃O-(CH₂-CH₂O)₃](EtO)₂Si(CH₂)₃ S₄Bt, [C₁₆H₃₃O-(CH₂-CH₂O)₄](EtO)₂Si(CH₂)₃ S₄Bt, [C₁₆H₃₃O-(CH₂-CH₂O)₅](EtO)₂Si(CH₂)₃ S₄Bt, [C₁₆H₃₃O-(CH₂-CH₂O)₆](EtO)₂Si(CH₂)₃ S₄Bt, [C₁₇H₃₅O-(CH₂-CH₂O)₂](EtO)₂Si(CH₂)₃ S₄Bt, [C₁₇H₃₅O-(CH₂-CH₂O)₃](EtO)₂Si(CH₂)₃ S₄Bt, [C₁₇H₃₅O-(CH₂-CH₂O)₄](EtO)₂Si(CH₂)₃ S₄Bt, [C₁₇H₃₅O-(CH₂-CH₂O)₅](EtO)₂Si(CH₂)₃ S₄Bt, [C₁₇H₃₅O-(CH₂-CH₂O)₆](EtO)₂Si(CH₂)₃ S₄Bt,
[C₁₁H₂₃O-(CH₂-CH₂O)₂]₂(EtO)Si(CH₂)₃ S₄Bt, [C₁₁H₂₃O-(CH₂-CH₂O)₃]₂(EtO)Si(CH₂)₃ S₄Bt, [C₁₁H₂₃O-(CH₂-CH₂O)₄]₂(EtO)Si(CH₂)₃ S₄Bt, [C₁₁H₂₃O-(CH₂-CH₂O)₅]₂(EtO)Si(CH₂)₃ S₄Bt, [C₁₁H₂₃O-(CH₂-CH₂O)₆]₂(EtO)Si(CH₂)₃ S₄Bt, [C₁₂H₂₅O-(CH₂-CH₂O)₂]₂(EtO)Si(CH₂)₃ S₄Bt, [C₁₂H₂₅O-(CH₂-CH₂O)₃]₂(EtO)Si(CH₂)₃ S₄Bt, [C₁₂H₂₅O-(CH₂-CH₂O)₄]₂(EtO)Si(CH₂)₃ S₄Bt, [C₁₂H₂₅O-(CH₂-CH₂O)₅]₂(EtO)Si(CH₂)₃ S₄Bt, [C₁₂H₂₅O-(CH₂-CH₂O)₆]₂(EtO)Si(CH₂)₃ S₄Bt, [C₁₃H₂₇O-(CH₂-CH₂O)₂]₂(EtO)Si(CH₂)₃ S₄Bt, [C₁₃H₂₇O-(CH₂-CH₂O)₃]₂(EtO)Si(CH₂)₃ S₄Bt, [C₁₃H₂₇O-(CH₂-CH₂O)₄]₂(EtO)Si(CH₂)₃ S₄Bt, [C₁₃H₂₇O-(CH₂-CH₂O)₅]₂(EtO)Si(CH₂)₃ S₄Bt, [C₁₃H₂₇O-(CH₂-CH₂O)₆]₂(EtO)Si(CH₂)₃ S₄Bt, [C₁₄H₂₉O-(CH₂-CH₂O)₂]₂(EtO)Si(CH₂)₃ S₄Bt, [C₁₄H₂₉O-(CH₂-CH₂O)₃]₂(EtO)Si(CH₂)₃ S₄Bt, [C₁₄H₂₉O-(CH₂-CH₂O)₄]₂(EtO)Si(CH₂)₃ S₄Bt, [C₁₄H₂₉O-(CH₂-CH₂O)₅]₂(EtO)Si(CH₂)₃ S₄Bt, [C₁₄H₂₉O-(CH₂-CH₂O)₆]₂(EtO)Si(CH₂)₃ S₄Bt, [C₁₅H₃₁O-(CH₂-CH₂O)₂]₂(EtO)Si(CH₂)₃ S₄Bt, [C₁₅H₃₁O-(CH₂-CH₂O)₃]₂(EtO)Si(CH₂)₃ S₄Bt, [C₁₅H₃₁O-(CH₂-CH₂O)₄]₂(EtO)Si(CH₂)₃ S₄Bt, [C₁₅H₃₁O-(CH₂-CH₂O)₅]₂(EtO)Si(CH₂)₃ S₄Bt, [C₁₅H₃₁O-(CH₂-CH₂O)₆]₂(EtO)Si(CH₂)₃ S₄Bt, [C₁₆H₃₃O-(CH₂-CH₂O)₂]₂(EtO)Si(CH₂)₃ S₄Bt, [C₁₆H₃₃O-(CH₂-CH₂O)₃]₂(EtO)Si(CH₂)₃ S₄Bt, [C₁₆H₃₃O-(CH₂-CH₂O)₄]₂(EtO)Si(CH₂)₃ S₄Bt, [C₁₆H₃₃O-(CH₂-CH₂O)₅]₂(EtO)Si(CH₂)₃ S₄Bt, [C₁₆H₃₃O-(CH₂-CH₂O)₆]₂(EtO)Si(CH₂)₃ S₄Bt, [C₁₇H₃₅O-(CH₂-CH₂O)₂]₂(EtO)Si(CH₂)₃ S₄Bt, [C₁₇H₃₅O-(CH₂-CH₂O)₃]₂(EtO)Si(CH₂)₃ S₄Bt, [C₁₇H₃₅O-(CH₂-CH₂O)₄]₂(EtO)Si(CH₂)₃ S₄Bt, [C₁₇H₃₅O-(CH₂-CH₂O)₅]₂(EtO)Si(CH₂)₃ S₄Bt, [C₁₇H₃₅O-(CH₂-CH₂O)₆]₂(EtO)Si(CH₂)₃ S₄Bt,
[C₁₁H₂₃O-(CH₂-CH₂O)₂]₃Si(CH₂)₃ S₄Bt, [C₁₁H₂₃O-(CH₂-CH₂O)₃]₃Si(CH₂)₃ S₄Bt, [C₁₁H₂₃O-(CH₂-CH₂O)₄]₃Si(CH₂)₃ S₄Bt, [C₁₁H₂₃O-(CH₂-CH₂O)₅]₃Si(CH₂)₃ S₄Bt, [C₁₁H₂₃O-(CH₂-CH₂O)₆]₃Si(CH₂)₃ S₄Bt, [C₁₂H₂₅O-(CH₂-CH₂O)₂]₃Si(CH₂)₃ S₄Bt, [C₁₂H₂₅O-(CH₂-CH₂O)₃]₃Si(CH₂)₃ S₄Bt, [C₁₂H₂₅O-(CH₂-CH₂O)₄]₃Si(CH₂)₃ S₄Bt, [C₁₂H₂₅O-(CH₂-CH₂O)₅]₃Si(CH₂)₃ S₄Bt, [C₁₂H₂₅O-(CH₂-CH₂O)₆]₃Si(CH₂)₃ S₄Bt, [C₁₃H₂₇O-(CH₂-CH₂O)₂]₃Si(CH₂)₃ S₄Bt, [C₁₃H₂₇O-(CH₂-CH₂O)₃]₃Si(CH₂)₃ S₄Bt, [C₁₃H₂₇O-(CH₂-CH₂O)₄]₃Si(CH₂)₃ S₄Bt, [C₁₃H₂₇O-(CH₂-CH₂O)₅]₃Si(CH₂)₃ S₄Bt, [C₁₃H₂₇O-(CH₂-CH₂O)₆]₃Si(CH₂)₃ S₄Bt, [C₁₄H₂₉O-(CH₂-CH₂O)₂]₃Si(CH₂)₃ S₄Bt, [C₁₄H₂₉O-(CH₂-CH₂O)₃]₃Si(CH₂)₃ S₄Bt, [C₁₄H₂₉O-(CH₂-CH₂O)₄]₃Si(CH₂)₃ S₄Bt, [C₁₄H₂₉O-(CH₂-CH₂O)₅]₃Si(CH₂)₃ S₄Bt, [C₁₄H₂₉O-(CH₂-CH₂O)₆]₃Si(CH₂)₃ S₄Bt, [C₁₅H₃₁O-(CH₂-CH₂O)₂]₃Si(CH₂)₃ S₄Bt, [C₁₅H₃₁O-(CH₂-CH₂O)₃]₃Si(CH₂)₃ S₄Bt, [C₁₅H₃₁O-(CH₂-CH₂O)₄]₃Si(CH₂)₃ S₄Bt, [C₁₅H₃₁O-(CH₂-CH₂O)₅]₃Si(CH₂)₃ S₄Bt, [C₁₅H₃₁O-(CH₂-CH₂O)₆]₃Si(CH₂)₃ S₄Bt, [C₁₆H₃₃O-(CH₂-CH₂O)₂]₃Si(CH₂)₃ S₄Bt, [C₁₆H₃₃O-(CH₂-CH₂O)₃]₃Si(CH₂)₃ S₄Bt, [C₁₆H₃₃O-(CH₂-CH₂O)₄]₃Si(CH₂)₃ S₄Bt, [C₁₆H₃₃O-(CH₂-CH₂O)₅]₃Si(CH₂)₃ S₄Bt, [C₁₆H₃₃O-(CH₂-CH₂O)₆]₃Si(CH₂)₃ S₄Bt, [C₁₇H₃₅O-(CH₂-CH₂O)₂]₃Si(CH₂)₃ S₄Bt, [C₁₇H₃₅O-(CH₂-CH₂O)₃]₃Si(CH₂)₃ S₄Bt, [C₁₇H₃₅O-(CH₂-CH₂O)₄]₃Si(CH₂)₃ S₄Bt, [C₁₇H₃₅O-(CH₂-CH₂O)₅]₃Si(CH₂)₃ S₄Bt, [C₁₇H₃₅O-(CH₂-CH₂O)₆]₃Si(CH₂)₃ S₄Bt,
[C₁₁H₂₃O-(CH₂-CH₂O)₂](EtO)₂Si(CH₂)₂C(CH₃)₂ S₄Bt, [C₁₁ H₂₃O-(CH₂-CH₂O)₃](EtO)₂Si(CH₂)₂C(CH₃)₂ S₄Bt, [C₁₁H₂₃O-(CH₂-CH₂O)₄] EtO)₂Si(CH₂)₂C(CH₃)₂ S₄Bt, [C₁₁H₂₃O-(CH₂-CH₂O)₅] EtO)₂Si(CH₂)₂C(CH₃)₂ S₄Bt, [C₁₁H₂₃O-(CH₂-CH₂O)₆] EtO)₂Si(CH₂)₂C(CH₃)₂ S₄Bt, [C₁₂H₂₅O-(CH₂-CH₂O)₂](EtO)₂Si(CH₂)₂C(CH₃)₂ S₄Bt, [C₁₂H₂₅O-(CH₂-CH₂O)₃](EtO)₂Si(CH₂)₂C(CH₃)₂ S₄Bt, [C₁₂H₂₅O-(CH₂-CH₂O)₄](EtO)₂Si(CH₂)₂C(CH₃)₂ S₄Bt, [C₁₂H₂₅O-(CH₂-CH₂O)₅](EtO)₂Si(CH₂)₂C(CH₃)₂ S₄Bt, [C₁₂H₂₅O-(CH₂-CH₂O)₆](EtO)₂Si(CH₂)₂C(CH₃)₂ S₄Bt, [C₁₃H₂₇O-(CH₂-CH₂O)₂](EtO)₂Si(CH₂)₂C(CH₃)₂ S₄Bt, [C₁₃H₂₇O-(CH₂-CH₂O)₃](EtO)₂Si(CH₂)₂C(CH₃)₂ S₄Bt, [C₁₃H₂₇O-(CH₂-CH₂O)₄](EtO)₂Si(CH₂)₂C(CH₃)₂ S₄Bt, [C₁₃H₂₇O-(CH₂-CH₂O)₅](EtO)₂Si(CH₂)₂C(CH₃)₂ S₄Bt, [C₁₃H₂₇O-(CH₂-CH₂O)₆](EtO)₂Si(CH₂)₂C(CH₃)₂ S₄Bt, [C₁₄H₂₉O-(CH₂-CH₂O)₂](EtO)₂Si(CH₂)₂C(CH₃)₂ S₄Bt, [C₁₄H₂₉O-(CH₂-CH₂O)₃](EtO)₂Si(CH₂)₂C(CH₃)₂ S₄Bt, [C₁₄H₂₉O-(CH₂-CH₂O)₄](EtO)₂Si(CH₂)₂C(CH₃)₂ S₄Bt, [C₁₄H₂₉O-(CH₂-CH₂O)₅](EtO)₂Si CH₂)₂C(CH₃)₂ S₄Bt, [C₁₄H₂₉O-(CH₂-CH₂O)₆](EtO)₂Si CH₂)₂C(CH₃)₂ S₄Bt, [C₁₅H₃₁O-(CH₂-CH₂O)₂](EtO)₂Si(CH₂)₂C(CH₃)₂ S₄Bt, [C₁₅H₃₁O-(CH₂-CH₂O)₃](EtO)₂Si(CH₂)₂C(CH₃)₂ S₄Bt, [C₁₅H₃₁O-(CH₂-CH₂O)₄](EtO)₂Si(CH₂)₂C(CH₃)₂ S₄Bt, [C₁₅H₃₁O-(CH₂-CH₂O)₅](EtO)₂Si(CH₂)₂C(CH₃)₂ S₄Bt, [C₁₅H₃₁O-(CH₂-CH₂O)₆](EtO)₂Si(CH₂)₂C(CH₃)₂ S₄Bt, [C₁₆H₃₃O-(CH₂-CH₂O)₂](EtO)₂Si(CH₂)₂C(CH₃)₂ S₄Bt, [C₁₆H₃₃O-(CH₂-CH₂O)₃](EtO)₂Si(CH₂)₂C(CH₃)₂ S₄Bt, [C₁₆H₃₃O-(CH₂-CH₂O)₄](EtO)₂Si(CH₂)₂C(CH₃)₂ S₄Bt, [C₁₆H₃₃O-(CH₂-CH₂O)₅](EtO)₂Si(CH₂)₂C(CH₃)₂ S₄Bt, [C₁₆H₃₃O-(CH₂-CH₂O)₆](EtO)₂Si(CH₂)₂C(CH₃)₂ S₄Bt, [C₁₇H₃₅O-(CH₂-CH₂O)₂](EtO)₂Si(CH₂)₂C(CH₃)₂ S₄Bt, [C₁₇H₃₅O-(CH₂-CH₂O)₃](EtO)₂Si(CH₂)₂C(CH₃)₂ S₄Bt, [C₁₇H₃₅O-(CH₂-CH₂O)₄](EtO)₂Si(CH₂)₂C(CH₃)₂ S₄Bt, [C1₇H₃₅O-(CH₂-CH₂O)₅](EtO)₂Si(CH₂)₂C(CH₃)₂ S₄Bt, [C₁₇H₃₅O-(CH₂-CH₂O)₆](EtO)₂Si(CH₂)₂C(CH₃)₂ S₄Bt,
[C₁₁ H₂₃O-(CH₂-CH₂O)₂]₂(EtO)Si(CH₂)₂C(CH₃)₂ S₄Bt, [C₁₁ H₂₃O-(CH₂-CH₂O)₃]₂(EtO)Si(CH₂)₂C(CH₃)₂ S₄Bt, [C₁₁ H₂₃O-(CH₂-CH₂O)₄]₂(EtO)Si(CH₂)₂C(CH₃)₂ S₄Bt, [C₁₁ H₂₃O-(CH₂-CH₂O)₅]₂(EtO)Si(CH₂)₂C(CH₃)₂ S₄Bt, [C₁₁ H₂₃O-(CH₂-CH₂O)₆]₂(EtO)Si(CH₂)₂C(CH₃)₂ S₄Bt, [C₁₂H₂₅O-(CH₂-CH₂O)₂]₂(EtO)Si(CH₂)₂C(CH₃)₂ S₄Bt, [C₁₂H₂₅O-(CH₂-CH₂O)₃]₂(EtO)Si(CH₂)₂C(CH₃)₂ S₄Bt, [C₁₂H₂₅O-(CH₂-CH₂O)₄]₂(EtO)Si(CH₂)₂C(CH₃)₂ S₄Bt, [C₁₂H₂₅O-(CH₂-CH₂O)₅]₂(EtO)Si(CH₂)₂C(CH₃)₂ S₄Bt, [C₁₂H₂₅O-(CH₂-CH₂O)₆]₂(EtO)Si(CH₂)₂C(CH₃)₂ S₄Bt, [C₁₃H₂₇O-(CH₂-CH₂O)₂]₂(EtO)Si(CH₂)₂C(CH₃)₂ S₄Bt, [C₁₃H₂₇O-(CH₂-CH₂O)₃]₂(EtO)Si(CH₂)₂C(CH₃)₂ S₄Bt, [C₁₃H₂₇O-(CH₂-CH₂O)₄]₂(EtO)Si(CH₂)₂C(CH₃)₂ S₄Bt, [C₁₃H₂₇O-(CH₂-CH₂O)₅]₂(EtO)Si(CH₂)₂C(CH₃)₂ S₄Bt, [C₁₃H₂₇O-(CH₂-CH₂O)₆]₂(EtO)Si(CH₂)₂C(CH₃)₂ S₄Bt, [C₁₄H₂₉O-(CH₂-CH₂O)₂]₂(EtO)Si(CH₂)₂C(CH₃)₂ S₄Bt, [C₁₄H₂₉O-(CH₂-CH₂O)₃]₂(EtO)Si(CH₂)₂C(CH₃)₂ S₄Bt, [C₁₄H₂₉O-(CH₂-CH₂O)₄]₂(EtO)Si(CH₂)₂C(CH₃)₂ S₄Bt, [C₁₄H₂₉O-(CH₂-CH₂O)₅]₂(EtO)Si(CH₂)₂C(CH₃)₂ S₄Bt, [C₁₄H₂₉O-(CH₂-CH₂O)₆]₂(EtO)Si(CH₂)₂C(CH₃)₂ S₄Bt, [C₁₅H₃₁O-(CH₂-CH₂O)₂]₂(EtO)Si(CH₂)₂C(CH₃)₂ S₄Bt, [C₁₅H₃₁O-(CH₂-CH₂O)₃]₂(EtO)Si(CH₂)₂C(CH₃)₂ S₄Bt, [C₁₅H₃₁O-(CH₂-CH₂O)₄]₂(EtO)Si(CH₂)₂C(CH₃)₂ S₄Bt, [C₁₅H₃₁O-(CH₂-CH₂O)₅]₂(EtO)Si(CH₂)₂C(CH₃)₂ S₄Bt, [C₁₅H₃₁O-(CH₂-CH₂O)₆]₂(EtO)Si(CH₂)₂C(CH₃)₂ S₄Bt, [C₁₆H₃₃O-(CH₂-CH₂O)₂]₂(EtO)Si(CH₂)₂C(CH₃)₂ S₄Bt, [C₁₆H₃₃O-(CH₂-CH₂O)₃]₂(EtO)Si(CH₂)₂C(CH₃)₂ S₄Bt, [C₁₆H₃₃O-(CH₂-CH₂O)₄]₂(EtO)Si(CH₂)₂C(CH₃)₂ S₄Bt, [C₁₆H₃₃O-(CH₂-CH₂O)₅]₂(EtO)Si(CH₂)₂C(CH₃)₂ S₄Bt, [C₁₆H₃₃O-(CH₂-CH₂O)₆]₂(EtO)Si(CH₂)₂C(CH₃)₂ S₄Bt, [C₁₇H₃₅O-(CH₂-CH₂O)₂]₂(EtO)Si(CH₂)₂C(CH₃)₂ S₄Bt, [C₁₇H₃₅O-(CH₂-CH₂O)₃]₂(EtO)Si(CH₂)₂C(CH₃)₂ S₄Bt, [C₁₇H₃₅O-(CH₂-CH₂O)₄]₂(EtO)Si(CH₂)₂C(CH₃)₂ S₄Bt, [C₁₇H₃₅O-(CH₂-CH₂O)₅]₂(EtO)Si(CH₂)₂C(CH₃)₂ S₄Bt, [C₁₇H₃₅O-(CH₂-CH₂O)₆]₂(EtO)Si(CH₂)₂C(CH₃)₂ S₄Bt,
[C₁₁H₂₃O-(CH₂-CH₂O)₂]₃Si(CH₂)₂C(CH₃)₂ S₄Bt, [C₁₁H₂₃O-(CH₂-CH₂O)₃]₃Si(CH₂)₂C(CH₃)₂ S₄Bt, [C₁₁H₂₃O-(CH₂-CH₂O)₄]₃Si(CH₂)₂C(CH₃)₂ S₄Bt, [C₁₁H₂₃O-(CH₂-CH₂O)₅]₃Si(CH₂)₂C(CH₃)₂ S₄Bt, [C₁₁H₂₃O-(CH₂-CH₂O)₆]₃Si(CH₂)₂C(CH₃)₂ S₄Bt, [C₁₂H₂₅O-(CH₂-CH₂O)₂]₃Si(CH₂)₂C(CH₃)₂ S₄Bt, [C₁₂H₂₅O-(CH₂-CH₂O)₃]₃Si(CH₂)₂C(CH₃)₂ S₄Bt, [C₁₂H₂₅O-(CH₂-CH₂O)₄]₃Si(CH₂)₂C(CH₃)₂ S₄Bt, [C₁₂H₂₅O-(CH₂-CH₂O)₅]₃Si(CH₂)₂C(CH₃)₂ S₄Bt, [C₁₂H₂₅O-(CH₂-CH₂O)₆]₃Si(CH₂)₂C(CH₃)₂ S₄Bt [C₁₃H₂₇O-(CH₂-CH₂O)₂]₃Si(CH₂)₂C(CH₃)₂ S₄Bt, [C₁₃H₂₇O-(CH₂-CH₂O)₃]₃Si(CH₂)₂C(CH₃)₂ S₄Bt, [C₁₃H₂₇O-(CH₂-CH₂O)₄]₃Si(CH₂)₂C(CH₃)₂ S₄Bt, [C₁₃H₂₇O-(CH₂-CH₂O)₅]₃Si(CH₂)₂C(CH₃)₂ S₄Bt, [C₁₃H₂₇O-(CH₂-CH₂O)₆]₃Si(CH₂)₂C(CH₃)₂ S₄Bt, [C₁₄H₂₉O-(CH₂-CH₂O)₂]₃Si(CH₂)₂C(CH₃)₂ S₄Bt, [C₁₄H₂₉O-(CH₂-CH₂O)₃]₃Si(CH₂)₂C(CH₃)₂ S₄Bt, [C₁₄H₂₉O-(CH₂-CH₂O)₄]₃Si(CH₂)₂C(CH₃)₂ S₄Bt, [C₁₄H₂₉O-(CH₂-CH₂O)₅]₃Si(CH₂)₂C(CH₃)₂ S₄Bt, [C₁₄H₂₉O-(CH₂-CH₂O)₆]₃Si(CH₂)₂C(CH₃)₂ S₄Bt, [C₁₅H₃₁O-(CH₂-CH₂O)₂]₃Si(CH₂)₂C(CH₃)₂ S₄Bt, [C₁₅H₃₁O-(CH₂-CH₂O)₃]₃Si(CH₂)₂C(CH₃)₂ S₄Bt, [C₁₅H₃₁O-(CH₂-CH₂O)₄]₃Si(CH₂)₂C(CH₃)₂ S₄Bt, [C₁₅H₃₁O-(CH₂-CH₂O)₅]₃Si(CH₂)₂C(CH₃)₂ S₄Bt, [C₁₅H₃₁O-(CH₂-CH₂O)₆]₃Si(CH₂)₂C(CH₃)₂ S₄Bt, [C₁₆H₃₃O-(CH₂-CH₂O)₂]₃SiCH₂)₂C(CH₃)₂ S₄Bt, [C₁₆H₃₃O-(CH₂-CH₂O)₃]₃Si(CH₂)₂C(CH₃)₂ S₄Bt, [C₁₆H₃₃O-(CH₂-CH₂O)₄]₃Si(CH₂)₂C(CH₃)₂ S₄Bt, [C₁₆H₃₃O-(CH₂-CH₂O)₅]₃Si(CH₂)₂C(CH₃)₂ S₄Bt, [C₁₆H₃₃O-(CH₂-CH₂O)₆]₃Si(CH₂)₂C(CH₃)₂ S₄Bt, [C₁₇H₃₅O-(CH₂-CH₂O)₂]₃Si(CH₂)₂C(CH₃)₂ S₄Bt, [C₁₇H₃₅O-(CH₂-CH₂O)₃]₃Si(CH₂)₂C(CH₃)₂ S₄Bt, [C₁₇H₃₅O-(CH₂-CH₂O)₄]₃Si(CH₂)₂C(CH₃)₂ S₄Bt, [C₁₇H₃₅O-(CH₂-CH₂O)₅]₃Si(CH₂)₂C(CH₃)₂ S₄Bt, [C₁₇H₃₅O-(CH₂-CH₂O)₆]₃Si(CH₂)₂C(CH₃)₂ S₄Bt,
wobei Bt für eine Benzthiazolgruppe steht.

Benzthiazolhaltige Silane der Formel I können bevorzugt sein: Silane der Formel I mit R¹ = -O-C₂H₅, R² = -O-(CH₂CH₂O)₅-C₁₃H₂₇, und R³ = -(CH₂)₃- und Silane der Formel I mit R¹ = -O-C₂H₅, R² = -O-(CH₂CH₂O)₅-C₁₃H₂₇, und R³ = -(CH₂)₂C(CH₃)₂-.

Insbesondere bevorzugt ist die Verbindung [C₁₃H₂₇O-(CH₂-CH₂O)₅](EtO)₂Si(CH₂)₃ S₂Bt.

Ein weiterer Gegenstand der Erfindung ist ein Verfahren zur Herstellung der erfindungsgemäßen benzthiazolhaltigen Silane der Formel I 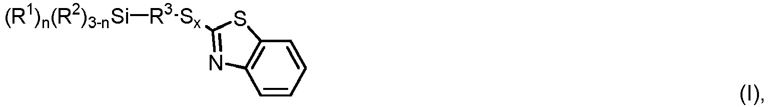 wobei R¹, R², R³, x und n die oben genannte Bedeutung haben, welches dadurch gekennzeichnet ist, dass man ein benzthiazolhaltiges Silan der Formel II 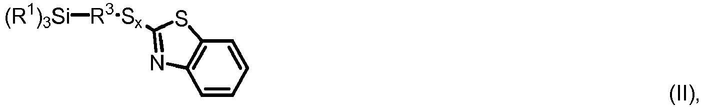 mit einer Verbindung der Formel III

R²-H (III),

umsetzt.

Benzthiazolhaltige Silane der Formel II können bevorzugt sein:
(EtO)₃Si(CH₂)₃ S₂Bt, (EtO)₃Si(CH₂)₂C(CH₃)₂ S₂Bt, (EtO)₃Si(CH₂)₃ S₃Bt, (EtO)₃Si(CH₂)₂C(CH₃)₂ S₃Bt oder (EtO)₃Si(CH₂)₃ S₄Bt, (EtO)₃Si(CH₂)₂C(CH₃)₂ S₄Bt,
wobei Bt für eine Benzthiazolgruppe steht.

Verbindungen der Formel III können bevorzugt sein:
[C₁₁ H₂₃O-(CH₂-CH₂O)₂]OH, [C₁₁ H₂₃O-(CH₂-CH₂O)₃]OH, [C₁₁ H₂₃O-(CH₂-CH₂O)₄]OH, [C₁₁ H₂₃O-(CH₂-CH₂O)₅]OH, [C₁₁ H₂₃O-(CH₂-CH₂O)₆]OH, [C₁₂H₂₅O-(CH₂-CH₂O)₂]OH, [C₁₂H₂₅O-(CH₂-CH₂O)₃]OH, [C₁₂H₂₅O-(CH₂-CH₂O)₄]OH, [C₁₂H₂₅O-(CH₂-CH₂O)₅]OH, [C₁₂H₂₅O-(CH₂-CH₂O)₆]OH, [C₁₃H₂₇O-(CH₂-CH₂O)₂]OH, [C₁₃H₂₇O-(CH₂-CH₂O)₃]OH, [C₁₃H₂₇O-(CH₂-CH₂O)₄]OH, [C₁₃H₂₇O-(CH₂-CH₂O)₅]OH, [C₁₃H₂₇O-(CH₂-CH₂O)₆]OH, [C₁₄H₂₉O-(CH₂-CH₂O)₂]OH, [C₁₄H₂₉O-(CH₂-CH₂O)₃]OH, [C₁₄H₂₉O-(CH₂-CH₂O)₄]OH, [C₁₄H₂₉O-(CH₂-CH₂O)₅]OH, [C₁₄H₂₉O-(CH₂-CH₂O)₆]OH, [C₁₅H₃₁O-(CH₂-CH₂O)₂]OH, [C₁₅H₃₁O-(CH₂-CH₂O)₃]OH, [C₁₅H₃₁O-(CH₂-CH₂O)₄]OH, [C₁₅H₃₁O-(CH₂-CH₂O)₅]OH, [C₁₅H₃₁O-(CH₂-CH₂O)₆]OH, [C₁₆H₃₃O-(CH₂-CH₂O)₂]OH, [C₁₆H₃₃O-(CH₂-CH₂O)₃]OH, [C₁₆H₃₃O-(CH₂-CH₂O)₄]OH, [C₁₆H₃₃O-(CH₂-CH₂O)₅]OH, [C₁₆H₃₃O-(CH₂-CH₂O)₆]OH, [C₁₇H₃₅O-(CH₂-CH₂O)₂]OH, [C₁₇H₃₅O-(CH₂-CH₂O)₃]OH, [C₁₇H₃₅O-(CH₂-CH₂O)₄]OH, [C₁₇H₃₅O-(CH₂-CH₂O)₅]OH oder [C₁₇H₃₅O-(CH₂-CH₂O)₆]OH.

Die erfindungsgemäßen benzthiazolhaltige Silan können mittels ¹H-, ¹³C- und ²⁹Si-NMR analysiert werden.

Bei dem erfindungsgemäßen Verfahren kann das benzthiazolhaltige Silan der Formel II zur Verbindung der Formel III dosiert werden.

Bei dem erfindungsgemäßen Verfahren kann bevorzugt Verbindung der Formel III zu benzthiazolhaltige Silan der Formel II dosiert werden.

Bei dem erfindungsgemäßen Verfahren kann das benzthiazolhaltige Silan der Formel II zur Verbindung der Formel III im molekularen Verhältnis von 1:1 bis 1:3, bevorzugt 1:1 bis 1:2, besonders bevorzugt im Verhältnis 1:1 bis 1,1:1, eingesetzt werden.

Das erfindungsgemäße Verfahren kann in Gegenwart eines Katalysators unter Abspaltung von R¹-H durchgeführt werden.

Die für die Umsetzung als Katalysatoren verwendeten Verbindungen können metallhaltig oder metallfrei sein.

Als metallfreie Verbindungen können organische Säuren, wie beispielsweise Trifluoressigsäure, Trifluormethansulfonsäure oder p-Toluolsulfonsäure, Trialkylammoniumverbindungen EsNH⁺Z⁻ oder Basen, wie beispielsweise Trialkylamine NE₃, mit E=Alkyl und Z⁻=Gegenion, eingesetzt werden.

Die für die Umsetzung als Katalysatoren eingesetzten Metallverbindungen können Übergangsmetallverbindungen sein.

Als Metallverbindungen für die Katalysatoren können Metallchloride, Metalloxide, Metalloxychloride, Metallsulfide, Metallsulfochloride, Metallalkoholate, Metallthiolate, Metalloxyalkoholate, Metallamide, Metallimide oder Übergangsmetallverbindungen mit multiplen gebundenen Liganden eingesetzt werden.

Beispielsweise können als Metallverbindungen Halogenide, Amide oder Alkoholate der 3. Hauptgruppe (M³⁺= B,Al,Ga,In,TI: M³⁺(OMe)₃, M³⁺(OEt)₃, M³⁺(OC₃H₇)₃, M³⁺(OC₄H₉)₃),
Halogenide, Oxide, Sulfide, Imide, Alkoholate, Amide, Thiolate und Kombinationen der genannten Substituentenklassen mit multiple gebundenen Liganden an Verbindungen der Lanthaniden-Gruppe (Seltenen Erden, Ordnungszahl 58 bis 71 im Periodensystem der Elemente),
Halogenide, Oxide, Sulfide, Imide, Alkoholate, Amide, Thiolate und Kombinationen der genannten Substituentenklassen mit multiple gebundenen Liganden an Verbindungen der 3. Nebengruppe (M³⁺= Sc,Y,La: M³⁺(OMe)₃, M³⁺(OEt)₃, M³⁺(OC₃H₇)₃, M³⁺(OC₄H₉)₃, cpM³⁺(Cl)₂, cp cpM³⁺(OMe)₂, cpM³⁺(OEt)₂, cpM³⁺(NMe₂)₂ mit cp = Cyclopentadienyl),
Halogenide, Sulfide, Amide, Thiolate oder Alkoholate der 4. Hauptgruppe (M⁴⁺=Si,Ge,Sn,Pb: M⁴⁺(OMe)₄, M⁴⁺(OEt)₄, M⁴⁺(OC₃H₇)₄, M⁴⁺(OC₄H₉)₄; M²⁺=Sn,Pb: M²⁺(OMe)₂, M²⁺(OEt)₂, M²⁺(OC₃H₇)₂, M²⁺(OC₄H₉)₂),Zinndilaurat, Zinndiacetat, Sn(OBu)₂
Halogenide, Oxide, Sulfide, Imide, Alkoholate, Amide, Thiolate und Kombinationen der genannten Substituentenklassen mit multiple gebundenen Liganden an Verbindungen der 4. Nebengruppe (M⁴⁺=Ti,Zr,Hf: (M⁴⁺(F)₄, M⁴⁺(Cl)₄, M⁴⁺(Br)₄, M⁴⁺(I)₄; M⁴⁺(OMe)₄, M⁴⁺(OEt)₄, M⁴⁺(OC₃H₇)₄, M⁴⁺(OC₄H₉)₄, cp₂Ti(Cl)₂, cp₂Zr(Cl)₂,cp₂Hf(Cl)₂, cp₂Ti(OMe)₂, cp₂Zr(OMe)₂,cp₂Hf(OMe)₂, cpTi(Cl)₃, cpZr(Cl)₃,cpHf(Cl)₃; cpTi(OMe)₃, cpZr(OMe)₃, cpHf(OMe)₃, M⁴⁺(NMe₂)₄, M⁴⁺(NEt₂)₄, M⁴⁺(NHC₄H₉)₄), Halogenide, Oxide, Sulfide, Imide, Alkoholate, Amide, Thiolate und Kombinationen der genannten Substituentenklassen mit multiple gebundenen Liganden an Verbindungen der 5. Nebengruppe (M⁵⁺, M⁴⁺ oder M³⁺=V,Nb,Ta: M⁵⁺(OMe)₅, M⁵⁺(OEt)₅, M⁵⁺(OC₃H₇)₅, M⁵⁺(OC₄H₉)₅, M³⁺O(OMe)₃, M³⁺O(OEt)₃, M³⁺O(OC₃H₇)₃, M³⁺O(OC₄H₉)₃, cpV(OMe)4, cpNb(OMe)₃ ,cpTa(OMe)₃; cpV(OMe)2, cpNb(OMe)₃,cpTa(OMe)₃),
Halogenide, Oxide, Sulfide, Imide, Alkoholate, Amide, Thiolate und Kombinationen der genannten Substituentenklassen mit multiple gebundenen Liganden an Verbindungen der 6. Nebengruppe (M⁶⁺, M⁵⁺ oder M⁴⁺=Cr,Mo,W: M⁶⁺(OMe)₆, M⁶⁺(OEt)₆, M⁶⁺(OC₃H₇)₆, M⁶⁺(OC₄H₉)₆, M⁶⁺O(OMe)₄, M⁶⁺O(OEt)₄, M⁶⁺O (OC3H7)4, M⁶⁺O(OC₄H₉)₄, M⁶⁺O₂(OMe)₂, M⁶⁺O₂(OEt)₂, M⁶⁺O₂(OC₃H₇)₂, M⁶⁺O₂(OC₄H₉)₂, M⁶⁺O₂(OSiMe₃)₂) oder
Halogenide, Oxide, Sulfide, Imide, Alkoholate, Amide, Thiolate und Kombinationen der genannten Substituentenklassen mit multiple gebundenen Liganden an Verbindungen der 7. Nebengruppe (M⁷⁺, M⁶⁺, M⁵⁺ oder M⁴⁺=Mn,Re: M⁷⁺O (OMe)₅, M⁷⁺O(OEt)₅, M⁷⁺O (OC₃H₇)₅, M⁷⁺O(OC₄H₉)₅, M⁷⁺O₂(OMe)₃, M⁷⁺O₂(OEt)₃, M⁷⁺O₂(OC₃H₇)₃, M⁷⁺O₂(OC₄H₉)₃, M⁷⁺O₂(OSiMe₃)₃, M⁷⁺O₃(OSiMe₃), M⁷⁺O₃(CH₃)) verwendet werden.

Die Metall- und Übergangsmetallverbindungen können eine freie Koordinationsstelle am Metall besitzen.

Als Katalysatoren können auch Metall- oder Übergangsmetallverbindungen verwendet werden, die durch Wasserzugabe zu hydrolysierbaren Metall- oder Übergangsmetallverbindungen gebildet werden.

In einer besonderen Ausführungsform kann man Titanate, wie beispielsweise Tetra-n-butylorthotitanat oder Tetra-iso-propyl-orthotitanat, als Katalysatoren verwenden.

Die Reaktion kann unter Luftausschluss durchgeführt werden.

Die Reaktion kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden. Bevorzugt kann das erfindungsgemäße Verfahren bei reduziertem Druck durchgeführt werden.

Erhöhter Druck kann ein Druck von 1,1 bar bis 100 bar, bevorzugt von 1,5 bar bis 50 bar, besonders bevorzugt von 2 bar bis 20 bar und ganz besonders bevorzugt von 2 bis 10 bar, sein.

Reduzierter Druck kann ein Druck von 1 mbar bis 1000 mbar, bevorzugt 1 mbar bis 500 mbar, besonders bevorzugt 1 mbar bis 250 mbar, ganz besonders bevorzugt 5 mbar bis 100 mbar, sein.

Die Reaktion kann man bei Temperaturen zwischen 20 und 200 °C, vorzugsweise zwischen 50 und 170°C, besonders bevorzugt zwischen 80 und 150°C, durchführen. Zur Vermeidung von Kondensationsreaktionen kann es vorteilhaft sein, die Reaktion in einer wasserfreien Umgebung, idealerweise in einer Inertgasatmosphäre, durchzuführen.

Der Alkohol R¹-H kann nach oder während der Reaktion entfernt, vorzugsweise abdestilliert, werden.

Das Reaktionsprodukt kann anschließend getrocknet werden.

Die benzthiazolhaltigen Silane der Formel I können als Haftvermittler zwischen anorganischen Materialien, zum Beispiel Glaskugeln, Glassplittern, Glasoberflächen, Glasfasern, oder oxidischen Füllstoffen, bevorzugt Kieselsäuren wie gefällte und pyrogene Kieselsäuren,
und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die benzthiazolhaltigen Silane der Formel I können als Kopplungsreagenzien in gefüllten Kautschukmischungen, beispielsweise Reifenlaufflächen, technischen Gummiartikeln oder Schuhsohlen, verwendet werden.

Ein weiterer Gegenstand der Erfindung sind Kautschukmischungen, enthaltend
(A) einen Kautschuk oder eine Mischung von Kautschuken,
(B) einen Füllstoff und
(C) mindestens ein benzthiazolhaltiges Silan der allgemeinen Formel I.

Der Kautschuk (A) kann vorzugsweise ein Dienkautschuk, vorzugsweise Naturkautschuk, Polyisopren, Polybutadien, Styrol/Butadien-Copolymerisate, Isobutylen/Isopren-Copolymerisate, Butadien/Acrylnitril-Copolymere, Ethylen/Propylen/Dien-Copolymerisate (EPDM), teilhydrierter oder vollständig hydrierter NBR-Kautschuk sein.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit Styrolgehalten von 1 bis 60 Gew.-%, besonders vorzugsweise 5 bis 50 Gew.-% (SBR),
- Chloropren (CR)
- Isobutylen/Isopren-Copolymerisate (IIR),
- Butadien/Acrylnitril-Copolymere mit Acrylnitrilgehalten von 5 bis 60, vorzugsweise 10 bis 50 Gew.-% (NBR),
- teilhydrierter oder vollständig hydrierter NBR-Kautschuk (HNBR)
- Ethylen/Propylen/Dien-Copolymerisate (EPDM)
- oben genannte Kautschuke, die zusätzlich funktionelle Gruppen besitzen, wie z.B. Carboxy-, Silanol- oder Epoxygruppen, beispielsweise epoxidierter NR, Carboxy-funktionalisierter NBR oder Amin (NR₂), Silanol- (-SiOH) bzw. Siloxy(-Si-OR) -funktionalisierter SBR,
sowie Mischungen dieser Kautschuke sein. Die genannten Kautschuke können zusätzlich Silicium oder Zinn gekoppelt sein.

In einer bevorzugten Ausführungsform können die Kautschuke schwefelvulkanisierbar sein. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden. Besonders bevorzugt können L-SBR-Kautschuke, deren Butadienteil einen Vinylanteil von über 20 Gew.-% aufweisen, eingesetzt werden. Ganz besonders bevorzugt können L-SBR-Kautschuke, deren Butadienteil einen Vinylanteil von über 50 Gew.-% aufweisen, eingesetzt werden.

Bevorzugt können Mischungen der oben genannten Kautschuke, die einen L-SBR-Anteil von über 50 Gew.-%, besonders bevorzugt über 60 Gew.-%, aufweisen, eingesetzt werden.

Der Kautschuk kann ein funktionallisierter Kautschuk sein, wobei die funktionellen Gruppen Aminund/oder Amid- und/oder Urethan- und/oder Harnstoff- und/oder Aminosiloxan- und/oder Siloxanund/oder Silyl- und/oder Alkylsilyl, beispielsweise N,N-bis(Trimethylsilyl)aminopropylmethyl-diethoxy-silan oder Methyltriphenoxysilan,- und/oder halogenierte Silyl- und/oder Silansulfidund/oder Thiol- und/oder Hydroxy- und/oder Ethoxy- und/oder Epoxy- und/oder Carboxy- und/oder Zinn-, beispielsweise Zinntetrachlorid oder Dibutyldichlorzinn-, und/oder Silanol- und/oder Hexachlordisiloxan- und/oder Thiocarboxy- und/oder Nitril- und/oder Nitroxid- und/oder Amidound/oder Imino- und/oder Urethan- und/oder Urea- und/oder Dimethylimidazolidinon- und/oder 2-Methyl-2-Thiazolin- und/oder 2-Benzothiazolacetonitril- und/oder 2-Thiophencarbonitril- und/oder 2-(N-methyl-N-3-Trimethoxysilylpropyl)Thiazolin- und/oder Carbodiimid- und/oder N-substituierte Aminoaldehyd- und/oder N-substituierte Aminoketon- und/oder N- substituierte Aminothioaldehyd-und/oder N- substituierte Aminothioketon- und/oder Benzophenon- und/oder Thiobenzophenon- mit Aminogruppe und/oder Isocyanat- und/oder Isothiocyanat- und/oder Hydrazin- und/oder Sulfonyl-und/oder Sulfinyl- und/oder Oxazolin- und/oder Ester-Gruppen sein können.

Als Füllstoffe können für die erfindungsgemäßen Kautschukmischungen die folgenden Füllstoffe eingesetzt werden:
- Ruße: Die hierbei zu verwendenden Ruße sind nach dem Flammruß-, Furnace-, Gasruß oder Thermal-Verfahren hergestellt und besitzen BET-Oberflächen von 20 bis 200 m²/g. Die Ruße können gegebenenfalls auch Heteroatome wie zum Beispiel Si enthalten.
- Amorphe Kieselsäuren, hergestellt zum Beispiel durch Fällung von Lösungen von Silikaten oder Flammenhydrolyse von Siliciumhalogeniden mit spezifischen Oberflächen von 5 bis 1000 m²/g, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie AI-, Mg-, Ca-, Ba-, Zn- und Titanoxiden vorliegen.
- Synthetische Silikate, wie Aluminiumsilikat, Erdalkalisilikate, wie Magnesiumsilikat oder Calciumsilikat, mit BET-Oberflächen von 20 bis 400 m²/g und Primärteilchendurchmessern von 10 bis 400 nm.
- Synthetische oder natürliche Aluminium-oxide und -hydroxide
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 m²/g, besonders bevorzugt 100 m²/g bis 250 m²/g, in Mengen von 5 bis 150 Gew.-Teilen, jeweils bezogen auf 100 Teile Kautschuk, eingesetzt werden.

Ganz besonders bevorzugt können gefällte Kieselsäuren als Füllstoff eingesetzt werden.

Die genannten Füllstoffe können alleine oder im Gemisch eingesetzt werden.

Die erfindungsgemäßen Kautschukmischungen können 5 bis 150 Gew.-Teile Füllstoff (B) und 0,1 bis 25 Gew.-Teile, bevorzugt 2 bis 20 Gew.-Teile, besonders bevorzugt 5 bis 15 Gew.-Teile, benzthiazolhaltiges Silan der Formel I (C), enthalten, wobei die Gew.-Teile auf 100 Gew.-Teile Kautschuk bezogen sind.

Das Gew.-Verhältnis von dem erfindungsgemäßen Silan zum verwendeten Vulkanisationsbeschleuniger kann größer 3, vorzugsweise größer 5, sein.

Vorteile der erfindungsgemäßen benzthiazolhaltigen Silane der Formel I ist, dass sie die Herstellung von hochverstärkten Kautschukmischungen ermöglichen, die ein ausreichendes Verarbeitungsverhalten aufweisen. Ein weiterer Vorteil der erfindungsgemäßen Silane ist, dass sie auch in Kautschukmischungen, die nur einen geringen Anteil an Vulkanisationsbeschleunigern beinhalten, zu einer hohen Verstärkung führen.

### Beispiele

### Vergleichsbeispiel 1: Herstellung von 2-[[3(Triethoxsilyl)propyl]dithio]benzthiazol

2-[[3(Triethoxsilyl)propyl]dithio]benzthiazol wird hergestellt wie in US6465581 in Beispiel 1 beschrieben, jedoch mit CH₂Cl₂ als Lösungsmittel.

### Beispiel 1: Herstellung von 2-[[((3,6,9,12,15-Pentaoxaoctacosoxy)(diethoxy)silyl)propyl]dithio]benzthiazol

Zu 2-[[3(Triethoxsilyl)propyl]dithio]benzthiazol (0.150 mol) aus Vergleichsbeispiel 1 wird 3,6,9,12,15-Pentaoxaoctacosan-1-ol (0.150 mol) und Ti(O*n*Bu)₄ (0.05 Gew.-% / 2-[[3(Triethoxsilyl)propyl]dithio]benzthiazol) zugegeben. Es wird auf 140 °C erwärmt, das entstehende Ethanol wird abdestilliert und nach 1 h ein Druck von 400-600 mbar eingestellt. Nach 1 h wird der Druck auf 16-200 mbar vermindert und es wird 4 h gerührt. Anschließend wird das Reaktionsgemisch auf Raumtemperatur erkalten gelassen und das Reaktionsprodukt filtriert. 2-[[((3,6,9,12,15-Pentaoxaoctacosoxy)(diethoxy)silyl)propyl]dithio]benzthiazol (Ausbeute: 85%, Umesterungsgrad 31% = 0.93 mol Polyetheralkohol / Si) wird als viskose Flüssigkeit erhalten. Die Reinheitsbestimmung erfolgt mittels ¹³C-NMR. Dort ist die Verschiebung der CH₂- Gruppe 61.8 ppm (neben der OH-Gruppe) gegenüber der angebunden Variante 62.1 ppm charakteristisch und es kann ein Vergleich gegen verbliebene Ethoxygruppen am Siliziumatom bei 58.0 ppm erfolgen.

### Beispiel 2: Herstellung von 2-[[((Bis-3,6,9,12,15-pentaoxaoctacosoxy)(ethoxy)silyl)propyl]dithio]benzthiazol

Zu 2-[[3(Triethoxsilyl)propyl]dithio]benzthiazol (0.150 mol) aus Vergleichsbeispiel 1 wird 3,6,9,12,15-Pentaoxaoctacosan-1-ol (0.300 mol) und Ti(O*n*Bu)₄ (0.05 Gew.-% / 2-[[3(Triethoxsilyl)propyl]dithio]benzthiazol) zugegeben. Es wird auf 140 °C erwärmt, das entstehende Ethanol wird abdestilliert und nach 1 h ein Druck von 400-600 mbar eingestellt. Nach 1 h wird der Druck auf 16-200 mbar vermindert und es wird 4 h gerührt. Anschließend wird das Reaktionsgemisch auf Raumtemperatur erkalten gelassen und das Reaktionsprodukt filtriert. 2-[[((Bis-3,6,9,12,15-pentaoxaoctacosoxy)(ethoxy)silyl)propyl]dithio]benzthiazol (Ausbeute: 98%, Umesterungsgrad 65% = 1.95 mol Polyetheralkohol / Si) wird als viskose Flüssigkeit erhalten. Die Reinheitsbestimmung erfolgt mittels ¹³C-NMR. Dort ist die Verschiebung der CH₂- Gruppe 61.8 ppm (neben der OH-Gruppe) gegenüber der angebunden Variante 62.1 ppm charakteristisch und es kann ein Vergleich gegen verbliebene Ethoxygruppen am Siliziumatom bei 58.0 ppm erfolgen.

### Beispiel 3: Herstellung von 2-[[((Tris-3,6,9,12,15-pentaoxaoctacosoxy)silyl)propyl]dithio]benzthiazol

Zu 2-[[3(Triethoxsilyl)propyl]dithio]benzthiazol (0.150 mol) aus Vergleichsbeispiel 1 wird 3,6,9,12,15-Pentaoxaoctacosan-1-ol (0.450 mol) und Ti(O*n*Bu)₄ (0.05 Gew.-% / 2-[[3(Triethoxsilyl)-propyl]dithio]benzthiazol) zugegeben. Es wird auf 140 °C erwärmt, das entstehende Ethanol wird abdestilliert und nach 1 h ein Druck von 400-600 mbar eingestellt. Nach 1 h wird der Druck auf 16 - 200 mbar vermindert und es wird 4 h gerührt. Anschließend wird das Reaktionsgemisch auf Raumtemperatur erkalten gelassen und das Reaktionsprodukt filtriert. 2-[[((Tris-3,6,9,12,15-pentaoxaoctacosoxy)silyl)propyl]dithio]benzthiazol (Ausbeute: 94%, Umesterungsgrad >95% = >2.85 mol Polyetheralkohol / Si) wird als viskose Flüssigkeit erhalten.

Die Reinheitsbestimmung erfolgt mittels ¹³C-NMR. Dort ist die Verschiebung der CH₂-Gruppe 61.8 ppm (neben der OH-Gruppe) gegenüber der angebunden Variante 62.1 ppm charakteristisch und es kann ein Vergleich gegen verbliebene Ethoxygruppen am Siliziumatom bei 58.0 ppm erfolgen.

### Beispiel 4: Kautschukmischungen

In diesem Beispiel werden die erfindungsgemäßen Silane mit den, aus dem Stand der Technik bekannten benzthiazolhaltigen, Silanen verglichen.

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks.

Das für die Beispielmischung I verwendete erfindungsgemäße Silan I ist das in Beispiel I hergestellte erfindungsgemäße Silan. Seine Struktur entspricht der allgemeinen Formel I mit R¹ gleich Ethoxy, R² gleich O(C₂H₄O)₅C₁₃H₂₇, R³ gleich -CH₂CH₂CH₂- und n gleich 2.

Das für die Beispielmischung II verwendete erfindungsgemäße Silan II ist das in Beispiel II hergestellte erfindungsgemäße Silan II. Seine Struktur entspricht der allgemeinen Formel I mit R¹ gleich Ethoxy, R² gleich O(C₂H₄O)₅C₁₃H₂₇, R³ gleich -CH₂CH₂CH₂- und n gleich 1.

Das für die Beispielmischung III verwendete erfindungsgemäße Silan III ist das in Beispiel III hergestellte erfindungsgemäße Silan. Seine Struktur entspricht der allgemeinen Formel I mit R² gleich O(C₂H₄O)₅C₁₃H₂₇, R³ gleich -CH₂CH₂CH₂- und n gleich 0.

Die erfindungsmäßen Silane wurden so dosiert, dass das Verhältnis von Silan zum Vulkanisationsbeschleuniger Vulkacit CZ den Wert von 5 übersteigt.

Üblicherweise werden in Gummimischungen Vulkanisationsbeschleunigermengen von 1,5 phr bis 2,5 phr eingesetzt. In diesem Beispiel werden nur 0,8 phr des Vulkanisationsbeschleunigers Vulkacit CZ eingesetzt, so dass das Verhältnis vom eingesetzten Silan zum Beschleuniger jeweils größer als 5 ist.

Die für die Referenzmischungen I und II verwendeten Silane Si 266® und Si 363™ sind kommerziell von der Evonik Industries AG erhältlich. Bei dem für die Referenzmischung III verwendeten Silan handelt es sich um das in Vergleichsbeispiel 1 hergestellte 2-[[3(Triethoxsilyl)propyl]dithio]benzthiazol.

**Tabelle 1**

| Stufe 1 | | Referenz Mischung **I** | Referenz Mischung **II** | Referenz Mischung **III** | Beispiel Mischung **I** | Beispiel Mischung **II** | Beispiel Mischung **III** |
|---|---|---|---|---|---|---|---|
| Buna VSL 4526-2 | phr | 96,3 | 96,3 | 96,3 | 96,3 | 96,3 | 96,3 |
| Buna CB 24 | phr | 30,0 | 30,0 | 30,0 | 30,0 | 30,0 | 30,0 |
| ULTRASIL® 7000 GR | phr | 80,0 | 80,0 | 80,0 | 80,0 | 80,0 | 80,0 |
| Si 266® | phr | **5,80** | | | | | |
| Si 363™ | phr | | **9,00** | | | | |
| **2-[[3(Triethoxysilyl)propyl]** | | | | | | | |
| **dithio]benzthiazol** | phr | | | **3,68** | | | |
| **Silan aus Beispiel1** | phr | | | | **7,09** | | |
| **Silan aus Beispiel2** | phr | | | | | **10,51** | |
| **Silan aus Beispiel3** | phr | | | | | | **13,92** |
| N 330 | phr | 5,0 | 5,0 | 5,0 | 5,0 | 5,0 | 5,0 |
| ZnO | phr | 2,0 | 2,0 | 2,0 | 2,0 | 2,0 | 2,0 |
| Stearinsäure | phr | 2,0 | 2,0 | 2,0 | 2,0 | 2,0 | 2,0 |
| Oil | phr | 8,8 | 8,8 | 8,8 | 8,8 | 8,8 | 8,8 |
| Wax | phr | 2,0 | 2,0 | 2,0 | 2,0 | 2,0 | 2,0 |
| 6 PPD | phr | 2,0 | 2,0 | 2,0 | 2,0 | 2,0 | 2,0 |
| TMQ | phr | 1,5 | 1,5 | 1,5 | 1,5 | 1,5 | 1,5 |
| Stufe 2 | | | | | | | |
| Batch der Stufe 1 | | | | | | | |
| | | | | | | | |
| Stufe 3 | | | | | | | |
| Batch der Stufe 2 | | | | | | | |
| CBS | phr | 0,8 | 0,8 | 0,8 | 0,8 | 0,8 | 0,8 |
| Schwefel | phr | 2,0 | 2,0 | 2,0 | 2,0 | 2,0 | 2,0 |
| TBzTD | phr | 0,4 | 0,4 | 0,4 | 0,4 | 0,4 | 0,4 |

### Verwendete Substanzen:

^{a} Bei dem Polymer VSL 4526-2 handelt es sich um ein in Lösung polymerisiertes SBR-Copolymer der Lanxess AG, mit einem Styrolgehalt von 26 Gew.-% und einem Butadiengehalt von 74 Gew.-%. Das Copolymer enthält 26 Gew.-% Öl und weist eine Mooney-Viskosität (ML 1+4/100 °C) von 50 auf.

Bei dem Polymer Buna CB 24 handelt es sich um ein cis-1,4-Polybutadien (Neodymtyp) der Bayer AG, mit einem cis-1,4-Gehalt von mindestens 96 % und einer Mooney-Viskosität von 44.

ULTRASIL® 7000 GR ist eine leicht dispergierbare Kieselsäure der Evonik Industries AG und besitzt eine BET-Oberfläche von 170 m²/g.

Als Prozess-Öl wird Vivatec 500 der Hansen & Rosenthal KG verwendet. Vulkanox 4020 (6PPD), Vulkacit CZ (CBS) und Vulkacit D (DPG) sind Handelsprodukte der Lanxess Deutschland GmbH und Protektor G3108 ist ein Ozonschutzwachs der Paramelt B.V.. Der Coaktivator Perkacit Richon TBzTD (Tetrabenzylthiuramtetrasulfid) ist ein Produkt von Weber & Schaer GmbH & Co KG.

Corax N330 ist ein handelsüblicher Carbon Black der Orion Engineered Carbons GmbH.

Die Mischungen werden dreistufig in einem 1,5 L Innenmischer (E-Typ) bei einer Batch-Temperatur von 155 °C gemäß der in Tabelle 2 beschriebenen Mischvorschrift hergestellt.

**Tabelle 2**

| | Stufe 1 |
|---|---|
| Einstellungen | |
| Mischaggregat | Von HF Mixing Group GmbH; Typ GK 1,5 E |
| Füllgrad | 0,73 |
| Drehzahl | 80 min⁻¹ |
| Stempeldruck | 5,5 bar |
| Durchflußtemp. | 80 °C |

| Mischvorgang | |
|---|---|
| 0 bis 0,5 min | Kautschuke |
| 0,5 bis 1,0 min | 6PPD, TMQ |
| 1,0 bis 2,0 min | ½ Kieselsäure, Silan, ZnO, Fettsäure |
| 2,0 min | Lüften und säubern |
| 2,0 bis 3,0 min | ½ Kieselsäure, Ruß, TDAE-Öl, Ozonschutzwachs |
| 3,0 min | Lüften |
| 3,0 bis 5,0 min | Mischen bei 140 - 155 °C, Temperatur ggfs. über Drehzahlvariation einstellen |
| 5,0 min | Batch auswerfen und auf Labormischwalzwerk 45 s ein Fell bilden (Laborwalzwerk: Durchmesser 250 mm, Länge 190 mm, Walzenspalt 4 mm, Durchflußtemperatur 60 °C) |
| | 24 h Lagerung bei Raumtemperatur |

| | Stufe 2 |
|---|---|
| Einstellungen | |
| Mischaggregat | wie in Stufe 1 bis auf |
| Füllgrad | 0,69 |
| Drehzahl | 80 min⁻¹ |
| Durchflußtemp. | 90 °C |
| Mischvorgang | |
| 0 bis 1,0 min | Batch Stufe 1 aufbrechen |
| 1,0 bis 3,0 min | Mischen bei 140 - 155 °C, Temperatur ggfs. über Drehzahlvariation einstellen |
| 3,0 min | Batch auswerfen und auf Labormischwalzwerk 45 s ein Fell bilden (Laborwalzwerk: Durchmesser 250 mm, Länge 190 mm, Walzenspalt 4 mm, Durchflußtemperatur 60 °C) 3 h Lagerung bei Raumtemperatur |

| | |
|---|---|
| | Stufe 3 |
| Einstellungen | |
| Mischaggregat | wie in Stufe 1 bis auf |
| Füllgrad | 0,67 |
| Drehzahl | 40 min⁻¹ |
| Durchflußtemp. | 50 °C |
| Mischvorgang | |
| 0 bis 2,0 min | Batch Stufe 2 aufbrechen, Beschleuniger und Schwefel, mischen bei 100 °C, Temperatur ggfs. über Drehzahlvariation einstellen |
| 2,0 min | Batch auswerfen und auf Labormischwalzwerk 20 s ein Fell bilden (Laborwalzwerk: Durchmesser 250 mm, Länge 190 mm, Walzenspalt 4 mm, Durchflußtemperatur 80°C) |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100°C (3. Stufe) | ISO 289-1 |
| Vulkameterprüfung, 165 °C | ISO 6502 |
| MH - ML | |
| t10% | |
| t80% - t20% | |
| Zugversuch am Stab, 23 °C | ISO 37 |
| Shore-A-Härte, 23 °C | ISO 7619-1 |
| Ball-Rebound, 60 °C | ISO 8307 |
| | Fallhöhe 500 mm |
| | Stahlkugel 19 mm, 28 g |
| Abriebwiderstand, ermittelt mit einem Gerät mit rotierender Zylindertrommel, 10 N | ISO 4649 |
| Viskoelastische Eigenschaften | ISO 4664-1 |
| 0 und 60 °C, 16 Hz, 50 N Vorkraft und 25 N Am plitudenkraft | |
| Komplexer Modul E* (MPa) | |
| Verlustfaktor tan δ (-) | |

Aus sämtlichen Mischungen werden Prüfkörper durch eine fünfzehnminutige Vulkanisation unter Druck bei 165 °C hergestellt. In der Tabelle 4 sind die erhaltenen gummitechnischen Daten angegeben.

**Tabelle 4**

| | | Referenzmischung **I** | Referenzmischung **II** | Referenzmischung **III** | Beispielmischung **I** | Beispielmischung **II** | Beispielmischung **III** |
|---|---|---|---|---|---|---|---|
| | | | | | | | |
| *ML(1*+*4) [100 °C]* | ME | 61 | 80 | 96 | 64 | 50 | 44 |
| | | | | | | | |
| *MDR: 165 °C; 0,5°* | | | | | | | |
| ML | dNm | 2,4 | 2,8 | 4,1 | 2,7 | 2,0 | 1,6 |
| MH | dNm | 19,6 | 15,2 | 27,3 | 25,7 | 23,2 | 20,1 |
| M_{H-ML} | dNm | 17,2 | 12,4 | 23,2 | 23,0 | 21,2 | 18,5 |
| t 10 % | min | 1,5 | 0,6 | 0,3 | 0,6 | 1,5 | 3,1 |
| t 20 % | min | 3,6 | 0,8 | 0,9 | 3,0 | 4,0 | 4,4 |
| t 90 % | min | 14,5 | 3,1 | 7,5 | 7,3 | 7,8 | 8,4 |
| t 80 % - t 20 % | min | 6,4 | 1,3 | 5,2 | 3,2 | 2,6 | 2,5 |
| *Zugversuch am Stab* (6 *Stäbe S1;* 23 *°C)* | | | | | | | |
| Zugfestig keit | MPa | 15,4 | 16,6 | 15,3 | 17,6 | 16,3 | 15,5 |
| Modulus 100 % | MPa | 2,2 | 2,6 | 3,0 | 2,4 | 2,3 | 2,2 |
| Modulus 300 % | MPa | 9,3 | 14,6 | 12,5 | 11,4 | 10,5 | 9,8 |
| Modulus 300 % / 100 % | -- | 4,2 | 5,6 | 4,2 | 4,8 | 4,6 | 4,5 |
| Bruchdehnung | % | 442 | 330 | 352 | 417 | 415 | 425 |
| | | | | | | | |
| | | | | | | | |
| *Shore-A-Härte* | SH | 63 | 59 | 70 | 67 | 65 | 62 |
| | | | | | | | |
| *Abriebwiderstand* | mm³ | 72 | 51 | 70 | 74 | 78 | 89 |
| | | | | | | | |
| *Ball-Rebound; 60* °C | % | 59,5 | 71,7 | 59,9 | 62,5 | 64,8 | 64,0 |
| *Zwick, 16 Hz, 50 N* +/-*25 N* | | | | | | | |
| E*;0°C | Mpa | 20,7 | 12,2 | 41,0 | 20,0 | 14,2 | 12,4 |
| E*; 60 °C | MPa | 8,8 | 7,6 | 16,3 | 9,7 | 8,3 | 7,4 |
| tan δ; 0 °C | - | 0,439 | 0,353 | 0,311 | 0,392 | 0,354 | 0,349 |
| tan δ; 60 °C | - | 0,153 | 0,093 | 0,151 | 0,127 | 0,105 | 0,100 |

Alle drei Beispielmischungen weisen eine niedrigere Mooney-Viskosität ML (1+4) [100 °C] als die Referenzmischungen II und III, die die aus dem Stand der Technik bekannten Silane enthalten, auf. Der Vergleich mit der Referenzmischung **I**, die das konventionelle Silan Si 266® enthält, zeigt, dass das vorteilhafte Gummiwertebild der Referenzmischungen **II** und **III** in den Beispielmischungen erhalten bleibt. Der Modulus bei 300 % Dehnung, sowie der Verstärkungsindex Modulus 300 %/ 100 % liegen im Vergleich zur Referenzmischung **I** weiterhin auf einem deutlich höheren Niveau. Der Hystereseverlust, ausgedrückt durch die deutliche Absenkung des tan δ, 60 °C-Werts, ist stark reduziert.

Überraschenderweise und für den Fachmann unerwartet zeigt die Beispielmischung **I,** mit der niedrigsten Dosierung der erfindungsgemäßen Silane, das ausgewogenste Gummiwertebild. Sie weist den höchsten dynamischen Modulus E*, 0 °C der Beispielmischungen auf. Die Mooney-Viskosität liegt in der Größenordnung der Referenzmischung **I,** die das konventionelle Silan Si 266® enthält. Gegenüber den Referenzmischungen **II** und **III** ist die Zugfestigkeit erhöht. Gleichzeitig weist sie eine höhere Bruchdehnung auf.

### Beispiel 5:

In diesem Beispiel werden die erfindungsgemäßen Silane in einer Naturkautschuk-haltigen Gummimischung mit den, aus dem Stand der Technik bekannten benzthiazolhaltigen, Silanen verglichen.

Die für die Kautschukmischungen verwendete Rezeptur ist in der folgenden Tabelle 5 angegeben. Dabei bedeutet die Einheit phr wieder Gewichtsanteile bezogen auf 100 Teile des eingesetzten Rohkautschuks. Die Silandosierungen werden auf die eingesetzte Kieselsäuremenge angepasst.

Das für die Beispielmischung **I** verwendete erfindungsgemäße Silan **I** ist das in Beispiel **I** hergestellte erfindungsgemäße Silan. Seine Struktur entspricht der allgemeinen Formel **I** mit R¹ gleich Ethoxy, R² gleich O(C₂H₄O)₅C₁₃H₂₇, R³ gleich -CH₂CH₂CH₂- und n gleich 2. Das für die Beispielmischung II verwendete erfindungsgemäße Silan II ist das in Beispiel II hergestellte erfindungsgemäße Silan. Seine Struktur entspricht der allgemeinen Formel I, mit R¹ gleich Ethoxy, R² gleich O(C₂H₄O)₅C₁₃H₂₇, R³ gleich -CH₂CH₂CH₂- und n gleich 1. Das für die Beispielmischung III verwendete erfindungsgemäße Silan III ist das in Beispiel III hergestellte erfindungsgemäße Silan. Seine Struktur entspricht der allgemeinen Formel I, mit R² gleich O(C₂H₄O)₅C₁₃H₂₇, R³ gleich -CH₂CH₂CH₂- und n gleich 0.
Die für die Referenzmischungen **I** und II verwendeten Silane Si 266® und Si 363™ sind kommerziell von der Evonik Industries AG erhältlich. Bei dem für die Referenzmischung III verwendeten Silan handelt es sich um das in Vergleichsbeispiel 1 hergestellte 2-[[3(Triethoxsilyl)propyl]dithio]benzthiazol. Die übrigen Chemikalien sind wie in Beispiel 4 beschrieben erhältlich.

Die erfindungsgemäßen Silane werden äquimolar dosiert.

**Tabelle 5**

| | | Referenz Mischung **I** | Referenz Mischung **II** | Referenz Mischung **III** | Beispiel Mischung **I** | Beispiel Mischung **II** | Beispiel Mischung **III** |
|---|---|---|---|---|---|---|---|
| **Stufe 1** | | | | | | | |
| SMR 10 | phr | 100,0 | 100,0 | 100,0 | 100,0 | 100,0 | 100,0 |
| N234 | phr | | | | | | |
| ULTRASIL® 7000 GR | phr | 55,0 | 55,0 | 55,0 | 55,0 | 55,0 | 55,0 |
| Si 266® | phr | **5,0** | | | | | |
| Si 363™ | phr | | **6,2** | | | | |
| **2-[[3(Triethoxysilyl)pro pyl]** | | | | **2**,**5** | | | |
| **dithio]benzthiazol** | phr | | | | | | |
| **Silan aus Beispiel 1** | phr | | | | **4,9** | | |
| **Silan aus Beispiel 2** | phr | | | | | **7,2** | |
| **Silan aus Beispiel 3** | phr | | | | | | **9,6** |
| Stearinsäure | phr | 3,0 | 3,0 | 3,0 | 3,0 | 3,0 | 3,0 |
| ZnO | phr | 3,0 | 3,0 | 3,0 | 3,0 | 3,0 | 3,0 |
| 6-PPD | phr | 1,0 | 1,0 | 1,0 | 1,0 | 1,0 | 1,0 |
| TMQ | phr | 1,0 | 1,0 | 1,0 | 1,0 | 1,0 | 1,0 |
| Wachs | phr | 1,0 | 1,0 | 1,0 | 1,0 | 1,0 | 1,0 |
| | | | | | | | |

| **Stufe 2** | | | | | | | |
|---|---|---|---|---|---|---|---|
| Batch erster Stufe | | | | | | | |
| | | | | | | | |

| **Stufe 3** | | | | | | | |
|---|---|---|---|---|---|---|---|
| Batch zweiter Stufe | | | | | | | |
| CBS | phr | 1,0 | 1,0 | 1,0 | 1,0 | 1,0 | 1,0 |
| Schwefel | phr | 2,0 | 2,0 | 2,0 | 2,0 | 2,0 | 2,0 |

Die Mischungen werden dreistufig in einem 1,5 L Innenmischer (E-Typ) bei einer Batch-Temperatur von 150 °C gemäß der in Tabelle 6 beschriebenen Mischvorschrift hergestellt. Aus sämtlichen Mischungen wurden Prüfkörper durch eine Vulkanisation unter Druck bei 150 °C hergestellt. Die gummitechnische Prüfung erfolgt gemäß den in Tabelle 3 angegebenen Prüfmethoden. Die Ergebnisse sind in Tabelle 7 gezeigt.

**Tabelle 6**

| | Stufe 1 |
|---|---|
| Einstellungen | |
| Mischaggregat | Von HF Mixing Group GmbH; Typ GK 1,5 E |
| Füllgrad | 0,73 |
| Drehzahl | 80 min⁻¹ |
| Stempeldruck | 5,5 bar |
| Durchflußtemp. | 80 °C |

| Mischvorgang | |
|---|---|
| 0 bis 0,5 min | Kautschuk |
| 0,5 bis 1,5 min | ½ Kieselsäure, Silan, ZnO, Fettsäure |
| 1,5 min | Lüften und säubern |
| 1,5 bis 2,5 min | ½ Kieselsäure, 6PPD, TMQ, Ozonschutzwachs |
| 2,5 min | Lüften und säubern |
| 2,5 bis 4,0 min | Mischen bei 140 - 155 °C |
| 4,0 min | Lüften |
| 4,0 bis 5,5 min | Mischen bei 140 - 155 °C, Temperatur ggfs. über Drehzahlvariation einstellen |
| 5,5 min | Batch auswerfen und auf Labormischwalzwerk 45 s ein Fell bilden (Laborwalzwerk: Durchmesser 250 mm, Länge 190 mm, Walzenspalt 4 mm, Durchflußtemperatur 60 °C) 23 h Lagerung bei Raumtemperatur |
| | |

| | Stufe 2 |
|---|---|
| Einstellungen | |
| Mischaggregat | wie in Stufe 1 bis auf |
| Füllgrad | 0,69 |
| Drehzahl | 80 min⁻¹ |
| Durchflußtemp. | 90 °C |

| Mischvorgang | |
|---|---|
| 0 bis 1,0 min | Batch Stufe 1 aufbrechen |
| 1,0 bis 3,0 min | Mischen bei 140 - 155 °C, Temperatur ggfs. über Drehzahlvariation einstellen |
| 3,0 min | Batch auswerfen und auf Labormischwalzwerk 45 s ein Fell bilden (Laborwalzwerk: Durchmesser 250 mm, Länge 190 mm, Walzenspalt 4 mm, Durchflußtemperatur 60 °C) 3 h Lagerung bei Raumtemperatur |

| | Stufe 3 |
|---|---|
| Einstellungen | |
| Mischaggregat | wie in Stufe 1 bis auf |
| Füllgrad | 0,67 |
| Drehzahl | 40 min⁻¹ |
| Durchflußtemp. | 50 °C |
| Mischvorgang | |
| 0 bis 2,0 min | Batch Stufe 2 aufbrechen, Beschleuniger und Schwefel, mischen bei 100 °C, Temperatur ggfs. über Drehzahlvariation einstellen |
| 2,0 min | Batch auswerfen und auf Labormischwalzwerk 20 s ein Fell bilden (Laborwalzwerk: Durchmesser 250 mm, Länge 190 mm, Walzenspalt 4 mm, Durchflußtemperatur 80°C) |

**Tabelle 7**

| | | Referenz mischung **I** | Referenz mischung **II** | Referenz mischung **III** | Beispiel mischung **I** | Beispiel mischung **II** | Beispiel mischung **III** |
|---|---|---|---|---|---|---|---|
| *ML(1*+*4) [100 °C]* | ME | 60 | 58 | 65 | 63 | 58 | 53 |
| *MDR: 150 °C; 0,5°* | | | | | | | |
| M_{L} | dNm | 2,2 | 2,1 | 2,1 | 2,2 | 2,1 | 1,9 |
| M_{H} | dNm | 11,7 | 10,4 | 12,5 | 12,6 | 12,3 | 12,5 |
| M_{H} - M_{L} | dNm | 9,5 | 8,4 | 10,3 | 10,5 | 10,2 | 10,6 |
| t 10 % | min | 8,3 | 2,7 | 3,2 | 9,5 | 12,0 | 11,9 |
| t 20 % | min | 11,7 | 3,9 | 8,5 | 12,8 | 14,1 | 13,9 |
| t 90 % | min | 29,2 | 15,3 | 23,2 | 22,6 | 21,8 | 20,9 |
| t 80 % -t 20 % | min | 12,6 | 7,7 | 10,6 | 7,1 | 5,6 | 5,1 |
| | min | | | | | | |
| *Vulkanisationszeit (150 °C)* | min | 43 | 26 | 37 | 32 | 30 | 30 |
| *Zugfestigkeit (6 Stäbe S1; 23 °C)* | MPa | 16,2 | 15,8 | 13,7 | 21,6 | 21,8 | 22,4 |
| Modulus 100 % | MPa | 1,0 | 1,0 | 1,0 | 1,2 | 1,2 | 1,1 |
| Modulus 300 % | MPa | 3,4 | 3,2 | 2,9 | 4,1 | 4,4 | 4,2 |
| Modulus 300 % / 100 % | -- | 3,4 | 3,2 | 2,9 | 3,4 | 3,7 | 3,8 |
| Bruchdehnung | % | 719 | 732 | 706 | 795 | 778 | 791 |
| *Shore-A-Härte* | SH | 54 | 50 | 48 | 52 | 54 | 54 |
| *Abriebwiderstand* | mm³ | 230 | 295 | 299 | 178 | 152 | 149 |
| *Ball-Rebound; 60 °C* | % | 65,4 | 69,0 | 69,4 | 69,5 | 71,2 | 72,0 |
| *Zwick; 16 Hz; 50 N* +/-*25 N* | | | | | | | |
| E*; 0 °C | MPa | 9,0 | 7,8 | 7,6 | 7,3 | 7,5 | 7,1 |
| E*; 60 °C | MPa | 6,3 | 5,5 | 6,0 | 5,6 | 6,0 | 5,7 |
| tan δ; 0 °C | -- | 0,241 | 0,227 | 0,201 | 0,208 | 0,216 | 0,209 |
| tan δ; 60 °C | -- | 0,144 | 0,124 | 0,142 | 0,113 | 0,093 | 0,085 |

Bei allen drei Beispielmischungen liegen die Mooney-Viskositäten unter der der Referenzmischung III. Alle Beispielmischungen weisen eine höhere Zugfestigkeit und höhere Module 300% als die drei Referenzmischungen auf. Gleichzeitig ist bei allen die Bruchdehnung erhöht. Die gegenüber den Referenzen erhöhten Werte beim Ball-Rebound 60 °C sowie die niedrigeren tan δ, 60°C-Werte sind weitere Vorteile.

## Patentansprüche

1. Benzthiazolhaltiges Silan der Formel **I** 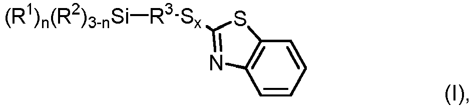
wobei R¹ gleich oder verschieden und eine R⁴O-Gruppe ist, mit R⁴ gleich H, Methyl, Ethyl, Propyl, C9-C30 verzweigten oder unverzweigten einbindigen Alkyl-, Alkenyl-, Aryl-oder Aralkylgruppe,
R² eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, m 1 bis 30 ist, und R⁶ eine verzweigte oder unverzweigte C1-C30-Alkylgruppe ist,
R³ eine verzweigte oder unverzweigte, gesättigte oder ungesättigte, aliphatische, aromatische oder gemischt aliphatische /aromatische zweibindige C1-C30 Kohlenwasserstoffgruppe ist,
x gleich 2-10 und
n gleich 0, 1 oder 2 ist.

2. Benzthiazolhaltiges Silan gemäß Anspruch 1, **dadurch gekennzeichnet, dass** R¹ Methoxy oder Ethoxy ist.

3. Benzthiazolhaltiges Silan gemäß Anspruch 1, **dadurch gekennzeichnet, dass** R² =-O-(CH₂CH₂O)₅-C₁₃H₂₇ ist.

4. Benzthiazolhaltiges Silan gemäß Anspruch 1, **dadurch gekennzeichnet, dass** R¹ = -O-C₂H₅, R² = -O-(CH₂CH₂O)₅-C₁₃H₂₇, R³ = (CH2)3, x=2 und n=2 ist.

5. Verfahren zur Herstellung der benzthiazolhaltigen Silane der Formel **I** gemäß Anspruch 1, **dadurch gekennzeichnet, dass** man ein benzthiazolhaltige Silan der Formel II 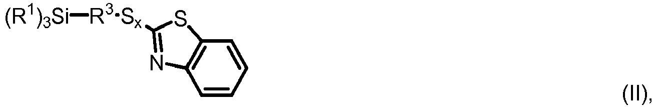 mit einer Verbindung der Formel III
R²-H (III),
umsetzt,
wobei R¹, R², R³, x und n die oben genannte Bedeutung haben.

6. Verfahren zur Herstellung der benzthiazolhaltigen Silane der Formel **I** gemäß Anspruch 5, **dadurch gekennzeichnet, dass** man die Umsetzung in Gegenwart eines Katalysators unter Abspaltung von R¹-H durchführt.

7. Verwendung der benzthiazolhaltigen Silane der Formel **I** gemäß Anspruch 1 als Kopplungsreagenzien in gefüllten Kautschukmischungen.

8. Kautschukmischungen, enthaltend
(A) einen Kautschuk oder eine Mischung von Kautschuken,
(B) einen Füllstoff und
(C) mindestens ein benzthiazolhaltiges Silan der allgemeinen Formel **I** gemäß Anspruch 1.

9. Kautschukmischungen gemäß Anspruch 8, **dadurch gekennzeichnet, dass** das Verhältnis vom eingesetzten Silan zum verwendeten Vulkanisationsbeschleuniger größer 5 ist.

10. Kautschukmischungen gemäß Anspruch 8, **dadurch gekennzeichnet, dass**
(A) Naturkautschuk oder eine Mischung von Kautschuken mit
Naturkautschuk ist.

## Claims

1. Benzothiazole-containing silane of the formula I 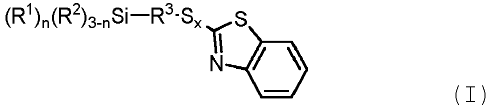
where R¹ is the same or different and is an R⁴O- group with R⁴ being H, methyl, ethyl, propyl, C₉-C₃₀ branched or unbranched monovalent alkyl, alkenyl, aryl or aralkyl group,
R² is an alkyl polyether group -O-(R⁵-O)ₘ-R⁶ with R⁵ being the same or different and being a branched or unbranched, saturated or unsaturated, aliphatic divalent C1-C30 hydrocarbon group, m is 1 to 30, and R⁶ is a branched or unbranched Cl-C30-alkyl group, R³ is a branched or unbranched, saturated or unsaturated, aliphatic, aromatic or mixed aliphatic/aromatic divalent C1-C30 hydrocarbon group,
x = 2-10 and
n = 0, 1 or 2.

2. Benzothiazole-containing silane according to Claim 1, **characterized in that** R¹ is methoxy or ethoxy.

3. Benzothiazole-containing silane according to Claim 1, **characterized in that** R² = -O-(CH₂CH₂O)₅-C₁₃H₂₇.

4. Benzothiazole-containing silane according to Claim 1, **characterized in that** R¹ = -O-C₂H₅, R² = -O-(CH₂CH₂O)₅-C₁₃H₂₇, R³ = (CH₂)₃, x = 2 and n = 2.

5. Process for preparing benzothiazole-containing silanes of the formula I according to Claim 1, **characterized in that** a benzothiazole-containing silane of the formula II 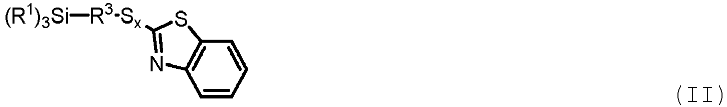 is reacted with a compound of formula III
R²-H (III)
where R¹, R², R³, x and n have the definition given above.

6. Process for preparing benzothiazole-containing silanes of the formula I according to Claim 5, **characterized in that** the reaction is conducted in the presence of a catalyst with elimination of R¹-H.

7. Use of the benzothiazole-containing silanes of the formula I according to Claim 1 as coupling reagents in filled rubber mixtures.

8. Rubber mixtures comprising
(A) a rubber or a mixture of rubbers,
(B) a filler and
(C) at least one benzothiazole-containing silane of the general formula I according to Claim 1.

9. Rubber mixtures according to Claim 8, **characterized in that** the ratio of the silane used to the vulcanization accelerator used is greater than 5.

10. Rubber mixtures according to Claim 8, **characterized in that**
(A) is natural rubber or a mixture of rubbers with natural rubber.

## Revendications

1. Silane contenant un benzothiazole de formule I 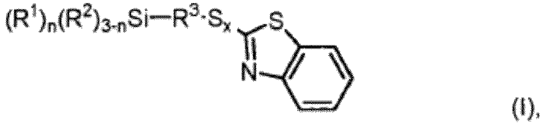
R¹ étant identique ou différent et étant un groupe R⁴O, R⁴ étant égal à H, méthyle, éthyle, propyle, un groupe monovalent alkyle, alcényle, aryle ou aralkyle ramifié ou non ramifié en C₉₋₃₀,
R² étant un groupe alkylpolyéther -O-(R⁵-O)ₘ-R⁶, R⁵, identique ou différent, étant un groupe hydrocarboné aliphatique divalent ramifié ou non ramifié, saturé ou insaturé, en C₁₋₃₀, m étant 1 à 30, et R⁶ étant un groupe alkyle ramifié ou non ramifié en C₁₋₃₀,
R³ étant un groupe hydrocarboné divalent en C₁₋₃₀, ramifié ou non ramifié, saturé ou insaturé, aliphatique, aromatique ou mixte aliphatique/aromatique,
x valant 2 à 10 et
n étant égal à 0, 1 ou 2.

2. Silane contenant un benzothiazole selon la revendication 1, **caractérisé en ce que** R¹ est méthoxy ou éthoxy.

3. Silane contenant un benzothiazole selon la revendication 1, **caractérisé en ce que** R² = -O-(CH₂CH₂O)₅-C₁₃H₂₇.

4. Silane contenant un benzothiazole selon la revendication 1, **caractérisé en ce que** R¹ = -O-C₂H₅, R² = -O- (CH₂CH₂O)₅-C₁₃H₂₇, R³ = (CH₂)₃, x = 2 et n = 2.

5. Procédé pour la préparation des silanes contenant un benzothiazole de formule I selon la revendication 1, **caractérisé en ce qu'**on transforme un silane de formule II contenant un benzothiazole, 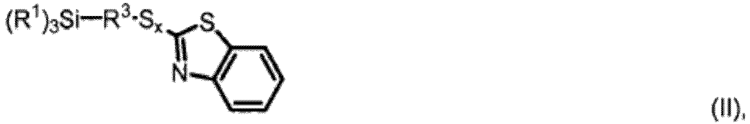 avec un composé de formule III
R²-H (III),
R¹, R², R³, x et n possédant la signification mentionnée ci-dessus.

6. Procédé pour la préparation des silanes contenant un benzothiazole de formule I selon la revendication 5, **caractérisé en ce qu'**on met en œuvre la transformation en présence d'un catalyseur avec dissociation de R¹-H.

7. Utilisation des silanes contenant un benzothiazole de formule I selon la revendication 1 en tant que réactifs de couplage dans des mélanges de caoutchouc remplis.

8. Mélanges de caoutchouc, contenant
(A) un caoutchouc ou un mélange de caoutchoucs,
(B) une charge et
(C) au moins un silane contenant un benzothiazole de formule générale I selon la revendication 1.

9. Mélanges de caoutchouc selon la revendication 8, **caractérisés en ce que** le rapport du silane utilisé sur l'accélérateur de vulcanisation employé est supérieur à 5.

10. Mélanges de caoutchouc selon la revendication 8, **caractérisés en ce que** (A) est un caoutchouc naturel ou un mélange de caoutchoucs avec un caoutchouc naturel.
